(19)

Europäisches
Patentamt
European
Patent Office
Office européen
des brevets

(11) **EP 4 180 481 A1**

(12) **EUROPEAN PATENT APPLICATION**

(43) Date of publication:
**17.05.2023  Bulletin 2023/20**

(21) Application number: **21306576.6**

(22) Date of filing: **10.11.2021**

(51) International Patent Classification (IPC):
***C08K 3/34*** *(2006.01)*          ***C08L 67/04*** *(2006.01)*

(52) Cooperative Patent Classification (CPC):
(C-Sets available)
**C08K 3/346;** C08K 2201/003; C08K 2201/006;
C08K 2201/016                                    (Cont.)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **IMERTECH SAS
75015 Paris (FR)**

(72) Inventors:
- **MELI, Gilles
  31410 Le Fauga (FR)**
- **RIJAL, Bidur
  30097 Georgia (FR)**

(74) Representative: **Haseltine Lake Kempner LLP
One Portwall Square
Portwall Lane
Bristol BS1 6BH (GB)**

(54) **TALC PARTICULATES AND BIOPLASTIC POLYMERS**

(57)     Polymer compositions comprising a bioplastic polymer and a talc particulate, uses of a talc particulate in polymer compositions comprising a bioplastic polymer, methods of modifying polymer compositions comprising a bioplastic polymer, and articles of manufacture comprising polymer compositions comprising a bioplastic polymer and a talc particulate.

**EP 4 180 481 A1**

(52) Cooperative Patent Classification (CPC): (Cont.)

C-Sets
**C08K 3/346, C08L 67/04**

**Description**

**TECHNICAL FIELD**

The present invention is directed to polymer compositions comprising a bioplastic polymer and a talc particulate, uses of a talc particulate in polymer compositions comprising a bioplastic polymer, methods of modifying polymer compositions comprising a bioplastic polymer, and articles of manufacture comprising polymer compositions comprising a bioplastic polymer and a talc particulate.

**BACKGROUND**

Bioplastic polymers, such as polylactic acid, are polymers produced from a biomass source (i.e. plant or animal material) such as vegetable fat and/or oil, corn starch, straw, woodchips, sawdust, food waste, and the like. Increased use of bioplastic polymers, in comparison to fossil fuel-based polymers, is desirable from an environmental perspective. However, some bioplastic polymers can exhibit relatively poor thermomechanical properties (such as impact resistance, tensile modulus or heat deflection temperature) in comparison to some fossil fuel-based polymers. For example, polylactic acid is known to exhibit low impact resistance, slow crystallisation rates and low heat deflection temperature. This has hindered wide-scale use of bioplastic polymers, particularly in applications require high mechanical strength, high temperature resistance and/or high impact resistance.

Talc particulates have been developed as fillers for polymer compositions. Talc particulate fillers can improve some mechanical properties such as heat deflection temperature and tensile modulus. However, talc particulate fillers typically have a detrimental effect on impact resistance. There is a need to improve the balance of the three properties: impact resistance, heat deflection temperature and tensile modulus, particularly for polymer compositions which comprise one or more bioplastic polymers.

**SUMMARY**

According to a first aspect, there is provided a polymer composition comprising a bioplastic polymer and a talc particulate having:

(A)

(a) a lamellarity index equal to or greater than about 2.8;
(b) one or both of:

(i) a $d_{95sedi}$ equal to or greater than about 1.0 $\mu$m and equal to or less than about 5.0 $\mu$m; and
(ii) a $d_{95laser}$ equal to or greater than about 7.0 $\mu$m and equal to or less than about 20.0 $\mu$m ; and

(c) one or more of:

(i) a BET surface area equal to or greater than about 20 $m^2$/g and equal to or less than about 30 $m^2$/g;
(ii) a $d_{50sedi}$ equal to or greater than about 0.5 $\mu$m and equal to or less than about 2.5 $\mu$m ; and
(iii) a $d_{50laser}$ equal to or greater than about 2.0 $\mu$m and equal to or less than about 8.0 $\mu$m;

(B) a delamination index according to TOT layers (DI(TOT)) equal to or greater than about 103;

(C) an oil absorption equal to or greater than about 65 mL/100 g and a lamellarity index equal to or greater than about 2.8; or

(D) a contact angle equal to or less than about 43° and one or more of the following:

(a) a $d_{95sedi}$ equal to or less than about 6.5 $\mu$m;
(b) a $d_{95laser}$ equal to or less than about 23.0 $\mu$m;
(c) a delamination index according to TOT layers (DI(TOT)) equal to or greater than about 103;
(d) an oil absorption equal to or greater than about 65 mL/100 g.

According to a second aspect, there is provided a use of a talc particulate in a polymer composition comprising a bioplastic polymer to: increase the impact strength of the polymer composition; increase the tensile modulus of the polymer composition; and/or increase the heat deflection temperature of the polymer composition; wherein the talc particulate has:

(A)

(a) a lamellarity index equal to or greater than about 2.8;
(b) one or both of:

(i) a $d_{95sedi}$ equal to or greater than about 1.0 $\mu$m and equal to or less than about 5.0 $\mu$m; and
(ii) a $d_{95laser}$ equal to or greater than about 7.0 $\mu$m and equal to or less than about 20.0 $\mu$m; and

(c) one or more of:

(i) a BET surface area equal to or greater than about 20 m$^2$/g and equal to or less than about 30 m$^2$/g;
(ii) a $d_{50sedi}$ equal to or greater than about 0.5 $\mu$m and equal to or less than about 2.5 $\mu$m ; and
(iii) a $d_{50laser}$ equal to or greater than about 2.0 $\mu$m and equal to or less than about 8.0 $\mu$m;

(B) a delamination index according to TOT layers (DI(TOT)) equal to or greater than about 103;

(C) an oil absorption equal to or greater than about 65 mL/100 g and a lamellarity index equal to or greater than about 2.8; or

(D) a contact angle equal to or less than about 43° and one or more of the following:

(a) a $d_{95sedi}$ equal to or less than about 6.5 $\mu$m;
(b) a $d_{95laser}$ equal to or less than about 23.0 $\mu$m;
(c) a delamination index according to TOT layers (DI(TOT)) equal to or greater than about 103;
(d) an oil absorption equal to or greater than about 65 mL/100 g.

According to a third aspect, there is provided a method of: increasing the impact strength of a polymer composition comprising a bioplastic polymer; increasing the tensile modulus of the polymer composition comprising the bioplastic polymer; and/or increasing the heat deflection temperature of the polymer composition comprising the bioplastic polymer;
wherein the method comprises adding a talc particulate to the polymer composition and the talc particulate has:

(A)

(a) a lamellarity index equal to or greater than about 2.8;
(b) one or both of:

(i) a $d_{95sedi}$ equal to or greater than about 1.0 $\mu$m and equal to or less than about 5.0 $\mu$m ; and
(ii) a $d_{95laser}$ equal to or greater than about 7.0 $\mu$m and equal to or less than about 20.0 $\mu$m ; and

(c) one or more of:

(i) a BET surface area equal to or greater than about 20 m$^2$/g and equal to or less than about 30 m$^2$/g;
(ii) a $d_{50sedi}$ equal to or greater than about 0.5 $\mu$m and equal to or less than about 2.5 $\mu$m ; and
(iii) a decker equal to or greater than about 2.0 $\mu$m and equal to or less than about 8.0 $\mu$m ;

(B) a delamination index according to TOT layers (DI(TOT)) equal to or greater than about 103;

(C) an oil absorption equal to or greater than about 65 mL/100 g and a lamellarity index equal to or greater than about 2.8; or

(D) a contact angle equal to or less than about 43° and one or more of the following:

(a) a $d_{95sedi}$ equal to or less than about 6.5 $\mu$m;
(b) a $d_{95laser}$ equal to or less than about 23.0 $\mu$m;

(c) a delamination index according to TOT layers (DI(TOT)) equal to or greater than about 103;
(d) an oil absorption equal to or greater than about 65 mL/100 g.

In the first, second or third aspects, the talc particulate may have one or more of the following: (a) a $d_{95laser}$ equal to or less than about 25.0 $\mu$m and/or equal to or greater than about 7.0 $\mu$m; (b) a $d_{95sedi}$ equal to or less than about 10.0 $\mu$m and/or equal to or greater than about 1.0 $\mu$m; (c) a $d_{50laser}$ equal to or less than about 12.0 $\mu$m and/or equal to or greater than about 2.0 $\mu$m ; (d) a $d_{50sedi}$ equal to or less than about 5.0 $\mu$m and/or equal to or greater than about 0.5 $\mu$m ; (e) a BET surface area equal to or greater than about 15 m$^2$/g and/or equal to or less than about 30 m$^2$/g.

In the first, second or third aspects, the talc particulate may have one or more of the following: (a) a coherent scattering domain (CSD c*) equal to or less than about 1150 Angstroms and/or equal to or greater than about 750 Angstroms; (b) equal to or less than about 120 tetrahedral-octahedral-tetrahedral (TOT) layers and/or equal to or greater than about 50 TOT layers; (c) a delamination index according to TOT layers (DI(TOT)) equal to or greater than about 103 and/or equal to or less than about 200.

In the first, second or third aspects, the talc particulate may have one or more of the following: (a) a shape factor equal to or greater than about 70 and/or equal to or less than about 200; (b) a lamellarity index equal to or greater than about 2.8 and/or equal to or less than about 6.0.

In the first, second or third aspects, the talc particulate may have an oil absorption equal to or greater than about 65 mL/100g and/or equal to or less than about 100 mL/100g.

In the first, second or third aspects, the talc particulate may have a contact angle equal to or less than about 43° and/or equal to or greater than about 33°.

In the first, second or third aspects, the talc particulate may have: (a) a lamellarity index equal to or greater than about 2.8, for example, from about 2.8 to about 3.5; (b) a $d_{95sedi}$ from about 3.0 $\mu$m to about 5.0 $\mu$m; (c) a $d_{95laser}$ from about 10.0 $\mu$m to 13.0 $\mu$m ; (d) a BET surface equal to or greater than about 20 m$^2$/g, for example, from about 20 m$^2$/g to about 30 m$^2$/g; (e) a $d_{50sedi}$ from about 1.0 $\mu$m to about 3.0 $\mu$m ; (f) a $d_{50laser}$ from about 4.0 $\mu$m to about 6.0 $\mu$m; (f) a delamination index according to TOT layers (DI(TOT)) equal to or greater than about 103, for example, from about 103 to about 110; (g) a coherent scattering domain c* from about 1050 to about 1150; and/or (h) a number of TOT layer (N(TOT)) from about 110 to about 120.

In the first, second or third aspects, the polymer composition may comprise no less than about 0.1 wt. %, for example, from about 0.1 wt. % to about 20 wt. %, of the talc particulate.

In the first, second or third aspects, the polymer composition may comprise no less than about 20 wt. %, for example, from about 20 wt. % to about 50 wt. %, of the bioplastic polymer.

In the first, second or third aspects, the bioplastic polymer may be polylactic acid.

In the first, second or third aspects, the polymer composition may comprise an impact modifier other than the talc particulate.

In a fourth aspect, there is provided a method for making the polymer composition according to the first aspect, the method comprising combining polymer comprising the bioplastic polymer, or polymer precursors comprising bioplastic polymer precursors, with the talc particulate.

In a fifth aspect, there is provided an article of manufacture comprising the polymer composition according to the first aspect.

The article of manufacture may be one or more of: a film, a sheet, a filament or fibre, a cast article, an injection moulded article, an additively manufactured article, a spun article, a woven or non-woven fabric, an item of tableware, a housing for a component, a packaging article such as a food packaging article or a pharmaceutical or cosmetic packaging article, a container, a tray, a bag, a cup, a bottle, a garment, a personal hygiene product, an automotive component, a medical device.

The skilled person will appreciate that, except where mutually exclusive, a feature described in relation to any one of the above aspects may be applied *mutatis mutandis* to any other aspect. Furthermore, except where mutually exclusive, any feature described herein may be applied to any aspect and/or combined with any other feature described herein.

## FIGURES

Embodiments will now be described by way of example only, with reference to the Figures, in which:

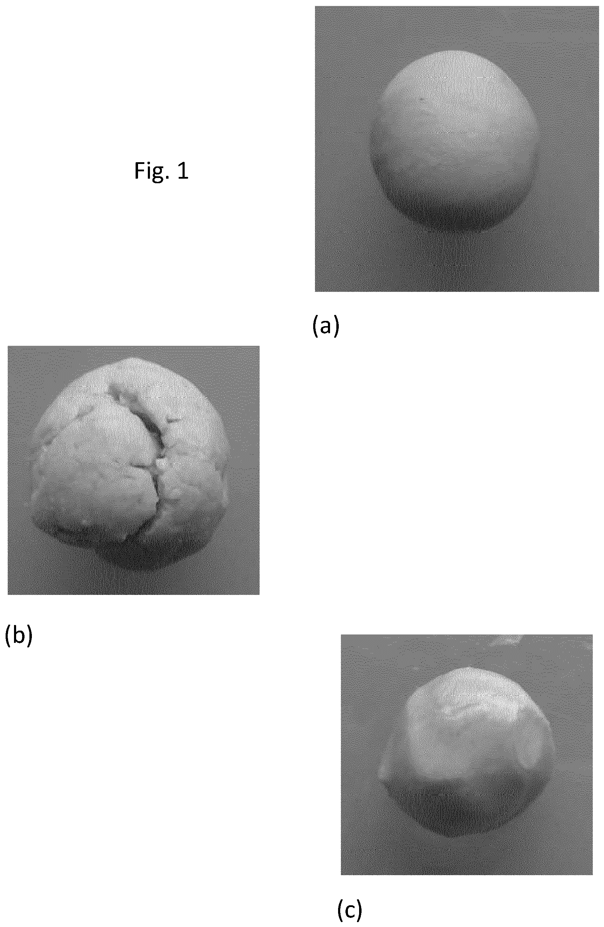

**Figure 1** shows photographs of a sample of a powder to which oil has been added to form a paste which (a) can be formed into a smooth ball, (b) forms a cracked ball or (c) forms a dripping ball.

## DETAILED DESCRIPTION OF THE INVENTION

The present invention is based on the surprising and advantageous finding that a new talc particulate can improve the properties of polymer compositions comprising a bioplastic polymer such as polylactic acid. The talc particulate is obtained by removing a portion of the largest particles of a high aspect ratio feed talc material. Thus, the talc particulate is a high aspect ratio talc having a relatively low topcut (i.e. $d_{95}$). This talc particulate has a number of properties that are different to those of the feed talc material and other known talc particulates. The talc particulate can therefore be defined in a number of ways.

Talc Particulate

As used herein, the term "talc" means either the magnesium silicate mineral, or the mineral chlorite (magnesium aluminium silicate), or a mixture of the two, optionally associated with other minerals, for example, dolomite and/or magnesite.

In certain embodiments, the talc is the magnesium silicate mineral or the mineral chlorite, or a mixture thereof. Optionally, the talc may further include dolomite or magnesite, or combinations thereof. The total amount of other minerals such as dolomite and/or magnesite in the talc may be less than about 35 % by weight, based on the total weight of talc, for example, less than about 30 % by weight, or less than about 25 % by weight, or less than about 20 % by weight, or less than about 15 % by weight, or less than about 10 % by weight, or less than about 5 % by weight, or less than about 1 % by weight, or less than about 0.75 % by weight, or 0.5 % by weight or less, based on the total weight of talc. In certain embodiments, the talc comprises, consists essentially of, or consists of magnesium silicate mineral. In certain embodiments, the talc is a mixture of magnesium silicate mineral and/or chlorite. The chlorite may, for example, comprise, consist essentially of, or consist of clinochlore ($(Mg,Fe^{2+})_5Al(Si_3Al)O_{10}(OH)_8$). For example, the chlorite may comprise primarily clinochlore. The weight ratio of magnesium silicate mineral to chlorite may be from about 5:1 to about 1:4, for example, from about 4:1 to about 1:1, or from about 4:1 to about 2:1, or from about 4:1 to about 2.5:1, or from about 4:1 to about 3:1, or about 2:1, or about 3:1, or about 4:1.

In certain embodiments, the talc is a hydroxylated magnesium silicate, which belongs to the family of layered phyllosilicates. Its elemental structure consists of $MgO_4(OH)$ octahedral layers (named "O") sandwiched between 6 ring silica tetrahedron $SiO_2$ (named "T"). This forms a repeating base unit made of TOT layers. These TOT layers will then pile up along c* axis to form a crystallite with a coherent crystalline structure whose size can be measured

The talc particulate may, for example, be macrocrystalline talc (i.e. not microcrystalline talc).

The crystalline structure of talc (e.g. microcrystalline or macrocrystalline) may be generally described in relation to a "morphology index" ("M" or "MI"), as described in H. J. Holland and M. J. Murtagh, "An XRD Morphology Index for Tales: The Effect of Particle Size and Morphology on the Specific Surface Area," Advances in X-ray Analysis, Vol. 42, pp. 421-428 (2000) and WO 2016/007363 A1, the contents of which are incorporated herein by reference. For example, talcs having a relatively high MI may be considered "platy" or "lamellar" talcs and generally may have a macrocrystalline structure, whereas talcs having a relatively lower MI are less platy and may have a microcrystalline structure. As used herein, the term "platy" refers to a talc composition having an MI greater than or equal to about 0.6. According to some embodiments, the morphology index of the talc may be greater than or equal to 0.7, greater than or equal to 0.75, greater than or equal to 0.8, greater than or equal to 0.85, or greater than or equal to 0.9.

There is provided herein a talc particulate having one or more of the following properties:

    (a) a coherent scattering domain (CSD c*) equal to or less than about 1150 Angstroms;
    (b) equal to or less than about 120 tetrahedral-octahedral-tetrahedral (TOT) layers;
    (c) a delamination index according to TOT layers (DI(TOT)) equal to or greater than about 103;
    (d) a shape factor equal to or greater than about 70;
    (e) a $d_{95laser}$ equal to or less than about 25.0 $\mu$m;
    (f) a $d_{95sedi}$ equal to or less than about 10.0 $\mu$m;
    (g) a lamellarity index equal to or greater than about 2.5;
    (h) a BET surface area equal to or greater than about 15 $m^2/g$;
    (i) an oil absorption equal to or greater than about 65 mL/100g;
    (j) a contact angle equal to or less than about 43°.

The talc particulate may have any one or more of properties (a) to (j). For example, the talc particulate may have two or more, three or more, four or more, five or more, six or more, seven or more, eight or more, or nine or more of properties (a) to (j). For example, the talc particulate may have all of (i.e. ten) properties (a) to (j).

The talc particulate may, for example, have any combination of the properties (a) to (j).

Properties (a) to (j) may broadly be divided into properties relating to particle shape (i.e. CSD c*, number of TOT layers, shape factor, lamellarity index and DI(TOT)), properties relating to particle size (i.e. $d_{95laser}$ and $d_{95sedi}$), a properties relating to the particle surface (i.e. BET surface area, oil absorption, and contact angle).

The talc particulate may, for example, have one or more of properties (a) to (j) relating to particle shape and one or more of properties (a) to (j) relating to particle size. The talc particulate may, for example, have one or more of properties (a) to (j) relating to particle shape and one or more of properties (a) to (j) relating to particle surface. The talc particulate may, for example, have one or more of properties (a) to (j) relating to particle size and one or more of properties (a) to (j) relating to particle surface. The talc particulate may, for example, have one or more of properties (a) to (j) relating to particle shape, one or more of properties (a) to (j) relating to particle size, and one or more of properties (a) to (j) relating to particle surface.

For example, the talc particulate may have a delamination index according to TOT layers (DI(TOT)) equal to or greater than about 103.

For example, the talc particulate may have an oil absorption equal to or greater than about 65 mL/100 g and a lamellarity index equal to or greater than about 2.5.

For example, the talc particulate may have a contact angle equal to or less than about 43° and one or more of the following:

a $d_{95sedi}$ equal to or less than about 6.5 $\mu$m;
a $d_{95laser}$ equal to or less than about 23.0 $\mu$m ;
a delamination index according to TOT layers (DI(TOT)) equal to or greater than about 103; and
an oil absorption equal to or greater than about 65 mL/100 g.

For example, the talc particulate may have:

(A) a lamellarity index equal to or greater than about 2.5;
(B) one or both of:

a $d_{95sedi}$ equal to or greater than about 1.0 and equal to or less than about 5.0 $\mu$m; and
a $d_{95laser}$ equal to or greater than about 7.0 $\mu$m and equal to or less than about 20.0 $\mu$m;
and

(C) one or more of:

a BET surface area equal to or greater than about 20 m$^2$/g and equal to or less than about 30 m$^2$/g;
a $d_{50sedi}$ equal to or greater than about 0.5 $\mu$m and equal to or less than about 2.5 $\mu$m; and
a decker equal to or greater than about 2.0 $\mu$m , and equal to or less than about 8.0 $\mu$m.

For example, the talc particulate may have a lamellarity index equal to or greater than about 2.8 and a CSD c* equal to or less than about 1150 Angstroms. For example, the talc particulate may have a lamellarity index equal to or greater than about 2.8 and a CSD c* equal to or less than about 1050 Angstroms. For example, the talc particulate may have a lamellarity index equal to or greater than about 2.8 and a CSD c* ranging from about 800 Angstroms to about 1050 Angstroms.

For example, the talc particulate may have a lamellarity index equal to or greater than about 2.8 and equal to or less than about 120 TOT layers. For example, the talc particulate may have a lamellarity index equal to or greater than about 2.8 and equal to or less than about 110 TOT layers. For example, the talc particulate may have a lamellarity index equal to or greater than about 2.8 and from about 85 to about 110 TOT layers.

For example, the talc particulate may have a lamellarity index equal to or greater than about 2.8 and a DI(TOT) equal to or greater than about 103. For example, the talc particulate may have a lamellarity index equal to or greater than about 2.8 and a DI(TOT) equal to or greater than about 110.

For example, the talc particulate may have a lamellarity index equal to or greater than about 2.8 and a shape factor equal to or greater than about 70. For example, the talc particulate may have a lamellarity index equal to or greater than about 2.8 and a shape factor equal to or greater than about 120. For example, the talc particulate may have a lamellarity index equal to or greater than about 2.8 and a shape factor equal to or greater than about 123. For example, the talc particulate may have a lamellarity index equal to or greater than about 2.8 and a shape factor equal to or greater than about 125.

For example, the talc particulate may have a lamellarity index equal to or greater than about 2.8 and a $d_{95laser}$ equal to or less than about 25.0 $\mu$m.

For example, the talc particulate may have a lamellarity index equal to or greater than about 2.8 and a $d_{95sedi}$ equal to or less than about 10.0 $\mu$m .

For example, the talc particulate may have a lamellarity index equal to or greater than about 2.8 and a $d_{50laser}$ equal to or less than about 12.0 $\mu$m.

For example, the talc particulate may have a lamellarity index equal to or greater than about 2.8 and a $d_{50sedi}$

equal to or less than about 5.0 $\mu$m.

For example, the talc particulate may have a lamellarity index equal to or greater than about 2.8 and a BET surface area equal to or greater than about 15 m$^2$/g.

For example, the talc particulate may have a lamellarity index equal to or greater than about 2.8 and an oil absorption equal to or greater than about 65 mL/100g.

For example, the talc particulate may have a lamellarity index equal to or greater than about 2.8 and a contact angle equal to or less than about 43°.

For example, the talc particulate may have:

   (a) a lamellarity index equal to or greater than about 2.8, for example, from about 2.8 to about 3.5;
   (b) a $d_{95sedi}$ from about 3.0 $\mu$m to about 5.0 $\mu$m;
   (c) a $d_{95laser}$ from about 10.0 $\mu$m to 13.0 $\mu$m;
   (c) a BET surface equal to or greater than about 20 m$^2$/g, for example, from about 20 m$^2$/g to about 30 m$^2$/g;
   (d) a $d_{50sedi}$ from about 1.0 $\mu$m to about 3.0 $\mu$m ;
   (e) a $d_{50laser}$ from about 4.0 $\mu$m to about 6.0 $\mu$m;
   (f) a delamination index according to TOT layers (DI(TOT)) equal to or greater than about 103, for example, from about 103 to about 110;
   (g) a coherent scattering domain c* from about 1050 to about 1150; and/or
   (h) a number of TOT layer (N(TOT)) from about 110 to about 120.

For example, the talc particulate may have: a lamellarity index equal to or greater than about 2.8, for example, from about 2.8 to about 3.5; a $d_{95sedi}$ from about 3.0 $\mu$m to about 5.0 $\mu$m ; a $d_{95laser}$ from about 10.0 $\mu$m to 13.0 $\mu$m; a BET surface equal to or greater than about 20 m$^2$/g, for example, from about 20 m$^2$/g to about 30 m$^2$/g; a $d_{50sedi}$ from about 1.0 $\mu$m to about 3.0 $\mu$m ; a decker from about 4.0 $\mu$m to about 6.0 $\mu$m; a delamination index according to TOT layers (DI(TOT)) equal to or greater than about 103, for example, from about 103 to about 110; a coherent scattering domain c* from about 1050 to about 1150; and a number of TOT layer (N(TOT)) from about 110 to about 120.

The properties of the talc particulate are further described below.

*Particle Shape Properties*

The CSD c* and number of TOT layers relate generally to the number of layers in the talc particles. The shape factor and lamellarity index relate generally to the overall shape of the talc particles. The DI(TOT) defines the relationship between the number of layers in the talc particles and the overall shape of the talc particles.

The coherent scattering domain (CSD) and number of TOT layers of the talc particulate may be determined by X-Ray Diffraction (XRD) and applying the Scherrer equation on the (002) and (006) peaks of the pattern.

For example, XRD patterns may be acquired using a PAnalytical X'PRO X-Ray diffractometer using a CuKa radiation of a wavelength of $\lambda$ = 1.5406 Å. The samples are obtained by filling an aluminium holder in order to obtain a quasi-random orientation. An example of acquisition parameters can be in the 2$\theta$ range = 8-80° with a step size of 0.01° and a step duration of 2 s. The Scherrer equation is then applied on the (002) and (006) peaks of the talc pattern which are located at approximately 2$\theta$ = 9.3 - 9.7° and 2$\theta$ = 28.3 - 28.9° on the XRD pattern. This formula uses the width of the peak at half height relative to the background line in order to calculate the coherent scattering domain of the talc crystallite according to the c* axis. Then, the number of TOT layers in a single talc crystallite can be deduced. This method is implemented in a paper on synthetic talc (Dumas et al., Angewandte Chemie International Edition 2016, 55, 9868 -9871), the contents of which are incorporated herein by reference.

The Scherrer equation is expressed as follows:

$$L = \frac{\lambda \times 0.91}{FWHM \times cos\theta}$$

L is the coherent scattering domain (CSD c*) (Å).
$\lambda$ is the wavelength of the X-Ray beam (Å).
FWHM is the full width at half maximum of the considered diffraction peak (rad).
$\theta$ is the position of the diffraction peak (rad).

From this coherent scattering domain, it is possible to deduce the number of TOT layers (N(TOT)) that are stacked in the coherent scattering domain:

$$N(TOT) = \frac{L}{d}$$

L is the coherent scattering domain along c* axis (Å).
d is the height of a talc elementary unit, i.e. the d(002) spacing.

d is calculated using the position of the (002) peak on the XRD pattern and the Bragg formula.

$$d = \frac{n\lambda}{2sin\theta}$$

n is the diffraction order.
$\lambda$ is the wavelength of the X-Ray beam (Å).
$\theta$ is the position of the diffraction peak (rad).

The talc particulate may, for example have a CSD c* equal to or less than about 1150 Angstroms. For example, the talc particulate may have a CSD c* equal to or less than about 1100 Angstroms or equal to or less than about 1050 Angstroms or equal to or less than about 1000 Angstroms or equal to or less than about 950 Angstroms.

The talc particulate may, for example, have a CSD c* equal to or greater than about 750 Angstroms. For example, the talc particulate may have a CSD c* equal to or greater than about 800 Angstroms or equal to or greater than about 850 Angstroms or equal to or greater than about 900 Angstroms.

For example, the talc particulate may have a CSD c* ranging from about 750 Angstroms to about 1150 Angstroms or from about 850 Angstroms to about 1050 Angstroms or from about 900 Angstroms to about 1000 Angstroms.

The talc particulate may, for example, have equal to or less than about 120 TOT layers. For example, the talc particulate may have equal to or less than about 115 TOT layers or equal to or less than about 110 TOT layers or equal to or less than about 105 TOT layers or equal to or less than about 100 TOT layers.

The talc particulate may, for example, have equal to or greater than about 50 TOT layers. For example, the talc particulate may have equal to or greater than about 55 TOT layers or equal to or greater than about 60 TOT layers or equal to or greater than about 65 TOT layers or equal to or greater than about 70 TOT layers or equal to or greater than about 75 TOT layers or equal to or greater than about 80 TOT layers or equal to or greater than about 85 TOT layers or equal to or greater than about 90 TOT layers or equal to or greater than about 95 TOT layers.

For example, the talc particulate may have from about 50 to about 120 TOT layers or from about 60 to about 120 TOT layers or from about 70 to about 120 TOT layers or from about 80 to about 115 TOT layers or from about 85 to about 110 TOT layers or from about 80 to about 105 TOT layers or from about 85 to about 105 TOT layers or from about 85 to about 100 TOT layers or from about 90 to about 100 TOT layers or from about 95 to about 100 TOT layers.

Shape factor refers to the property measured by the PANACEA (Particle Assessment by Natural Alignment and Conductivity Effect Analysis) method. This is equipment that enables the shape factor of a mineral to be measured. The equipment described in U.S. Patent 5,576,617, the contents of which are incorporated herein by reference, can be used. During the measurement, a talc particulate suspension is circulated by a pump through a cell where the conductivity is measured from one extremity to the other. When the pump is turned on, the non-spherical particles will naturally align along the axis of the pipe. In this position, the particles will present a minimal resistance to the flow of the electrical charges. The conductivity measurement is then maximal. When the pump is off, the particles will randomly orient according to Brownian movement. In this position, the electrical charges have to go through a longer path to progress in the suspension. The conductivity value then decreases. The number that is given by the tests results from the ratio between these 2 measurements (highest value over lowest value). Hence, a more lamellar product will lead to a higher ratio (higher shape factor) between these 2 measurements compared to a product showing a low lamellarity (lower shape factor).

For the shape factor measurement itself, a suspension volume corresponding to 50 g of dry product is taken. In order to avoid sedimentation when the pump is off, 10 mL of a dispersant, e.g. sodium polyacrylate, and 80 mL deionised water is added before homogenising the suspension. Then, the suspension is passed through a 53 $\mu$m BSS sieve in order to eliminate the coarse particles that may hinder the measurement. Deionized water (around 200 mL) is added in order to obtain a density between 1.08 and 1.12 (*i.e.* a weight concentration between 12 and 17 wt.%, for example approximately 15 wt%). The pH of the suspension is then measured to check it is within 8.5 and 10 and if it is not the case, sodium hydroxide is added. The suspension is then left to stand for at least 20 minutes. The PANACEA method is then performed after vigorously shaking to re-suspend the sample. The shape factor is obtained from an average of at least 3 measurements.

The talc particulate may, for example, have a shape factor equal to or greater than about 70. For example, the talc particulate may have a shape factor equal to or greater than about 75 or equal to or greater than about 80 or equal to or greater than about 85 or equal to or greater than about 90 or equal to or greater than about 95 or equal to or greater than about 100 or equal to or greater than about 105 or equal to or greater than about 110 or equal to or greater than about 115 or equal to or greater than about 120.

The talc particulate may, for example, have a shape factor equal to or less than about 200. For example, the talc particulate may have a shape factor equal to or less than about 195 or equal to or less than about 190 or equal to or less than about 185 or equal to or less than about 180 or equal to or less than about 175 or equal to or less than about 170 or equal to or less than about 165 or equal to or less than about 160 or equal to or less than about 155 or equal to or less than about 150 or equal to or less than about 145 or equal to or less than about 140 or equal to or less than about 135 or equal to or less than about 130.

For example, the talc particulate may have a shape factor ranging from about 70 to about 200 or from about 80 to about 200 or from about 90 to about 200 or from about 100 to about 200 or from about 100 to about 180 or from about 100 to about 160 or from about 100 to about 150 or from about 110 to about 140 or from about 120 to about 130.

Lamellarity index (L.I.) is defined by the following ratio:

$$\frac{d_{50laser} - d_{50sedi}}{d_{50sedi}}$$

in which "$d_{50laser}$" is the value of the mean particle size ($d_{50}$) measured by laser diffraction (standard NFX-11-666 or ISO 13320-1) and "$d_{50sedi}$" is the value of the median diameter obtained by sedimentation using a sedigraph (standard Afnor-X-11-683 ISO 13317-3), as described below and in the Examples. Reference may be made to the article by G. Baudet and J. P. Rona, Ind. Min. Mines et Carr. Les techn. June, July 1990, pp 55-61, which shows that this index is correlated to the mean ratio of the largest dimension of the particle to its smallest dimension.

In the sedimentation technique referred to above, particle size properties referred to herein for the talc particulate materials are as measured in a well-known manner by sedimentation of the particulate material in a fully dispersed condition in an aqueous medium using a Sedigraph III machine as supplied by Micromeritics Instruments Corporation, Norcross, Georgia, USA (www.micromeritics.com), and based on application of Stokes' Law. Such a machine provides measurements and a plot of the cumulative percentage by weight of particles having a size, referred to in the art as the 'equivalent spherical diameter' (e.s.d), less than given e.s.d values. The mean particle size $d_{50sedi}$ is the value determined in this way of the particle e.s.d at which there are 50% by weight of the particles which have an equivalent spherical diameter less than that $d_{50}$ value. The $d_{95sedi}$ value is the value at which 95% by weight of the particles have an esd less than that $d_{95sedi}$ value. Particle size properties may be determined in accordance with ISO 13317-3, or any method equivalent thereto.

In the laser diffraction technique referred to above, particle size properties referred to herein for the particulate talc materials are measured by wet Malvern laser scattering (standard ISO 13320-1). In this technique, the size of particles in powders, suspensions and emulsions may be measured using the diffraction of a laser beam, based on the application of Mie theory. Such a machine, for example a Malvern Mastersizer 2000 (as supplied by Malvern instruments) provides measurements and a plot of the cumulative percentage by volume of particles having a size, referred to in the art as the "equivalent spherical diameter" (e.s.d), less than given e.s.d values. The mean particle size $d_{50}$ is the value determined in this way of the particle e.s.d. at which there are 50% by weight of the particles which have an equivalent spherical diameter less than that $d_{50}$ value. For the avoidance of doubt, the measurement of particle size using laser light scattering is not an equivalent method to the sedimentation method referred to above.

Details of the sedigraph and laser particle size measurement methods used in the preparation of the present application are set out in the Examples.

In general, talc materials having a lamellarity index equal to or greater than about 2.8 may be referred to as "High Aspect Ratio" (HAR) talcs.

The talc particulate may, for example, have a lamellarity index equal to or greater than about 2.5. For example, the talc particulate may have a lamellarity index equal to or greater than about 2.6 or equal to or greater than about 2.7 or equal to or greater than about 2.8 or equal to or greater than about 2.9. In particular, the talc particulate may have a lamellarity index equal to or greater than about 2.8 or equal to or greater than about 2.9.

The talc particulate may, for example, have a lamellarity index equal to or less than about 6.0. For example, the talc particulate may have a lamellarity index equal to or less than about 5.5 or equal to or less than about 5.0 or equal to or less than about 4.5 or equal to or less than about 4.0 or equal to or less than about 3.5.

For example, the talc particulate may have a lamellarity index ranging from about 2.8 to about 6.0 or from about 2.8 to about 5.0 or from about 2.8 to about 4.0 or from about 2.8 to about 3.5.

Delamination index according to TOT layers (DI(TOT)) is defined by the following equation:

$$DI(TOT) = \frac{Shape\ Factor\ (PANACEA)}{N(TOT)}\ x\ 100$$

The talc particulate may, for example, have a DI(TOT) equal to or greater than about 103. For example, the talc particulate may have a DI(TOT) equal to or greater than about 105 or equal to or greater than about 110 or equal to or greater than about 115 or equal to or greater than about 120 or equal to or greater than about 125.

The talc particulate may, for example, have a DI(TOT) equal to or less than about 200. For example, the talc particulate may have a DI(TOT) equal to or less than about 195 or equal to or less than about 190 or equal to or less than about 185 or equal to or less than about 180 or equal to or less than about 175 or equal to or less than about 170 or equal to or less than about 165 or equal to or less than about 160 or equal to or less than about 155 or equal to or less than about 150 or equal to or less than about 145 or equal to or less than about 140.

The talc particulate may, for example, have a DI(TOT) ranging from about 103 to about 200 or from about 110 to about 200 or from about 120 to about 200 or from about 110 to about 190 or from about 120 to about 180 or from about 120 to about 170 or from about 120 to about 160 or from about 120 to about 150 or from about 120 to about 140.

*Particle Size Properties*

The "sedi" particle sizes referred to below relate to particle sizes measured by the sedimentation method described above in relation to lamellarity index. The "laser" particle sizes referred to below relate to particle sizes measured by the laser diffraction method described above in relation to lamellarity index.

The talc particulate may, for example, have a $d_{95laser}$ equal to or less than about 25.0 $\mu$m . For example, the talc particulate may have a $d_{95laser}$ equal to or less than about 24.0 $\mu$m or equal to or less than about 23.0 $\mu$m or equal to or less than about 22.0 $\mu$m or equal to or less than about 21.0 $\mu$m or equal to or less than about 20.0 $\mu$m or equal to or less than about 19.0 $\mu$m or equal to or less than about 18.0 $\mu$m or equal to or less than about 17.0 $\mu$m or equal to or less than about 16.0 $\mu$m or equal to or less than about 15.0 $\mu$m.

The talc particulate may, for example, have a $d_{95laser}$ equal to or greater than about 7.0 $\mu$m. for example, the talc particulate may have a $d_{95laser}$ equal to or greater than about 8.0 $\mu$m or equal to or greater than about 9.0 $\mu$m or equal to or greater than about 10.0 $\mu$m or equal to or greater than about 11.0 $\mu$m or equal to or greater than about 12.0 $\mu$m .

The talc particulate may, for example, have a $d_{95laser}$ ranging from about 7.0 $\mu$m to about 25.0 $\mu$m or from about 7.0 $\mu$m to about 20.0 $\mu$m or from about 10.0 $\mu$m to about 20.0 $\mu$m or from about 12.0 $\mu$m to about 16.0 $\mu$m .

In particular embodiments, the talc particulate has a $d_{95laser}$ equal to or less than about 23.0 $\mu$m . For example, the talc particulate may have a $d_{95laser}$ equal to or less than about 22.0 $\mu$m or equal to or less than about 21.0 $\mu$m or equal to or less than about 20.0 $\mu$m or equal to or less than about 19.0 $\mu$m or equal to or less than about 18.0 $\mu$m. For example, the talc particulate may have a $d_{95laser}$ equal to or greater than about 7.0 $\mu$m or equal to or greater than about 10.0 $\mu$m or equal to or greater than about 12.0 $\mu$m . For example, the talc particulate may have a $d_{95laser}$ ranging from about 7.0 $\mu$m to about 23.0 $\mu$m or from about 10.0 $\mu$m to about 23.0 $\mu$m or from about 12.0 $\mu$m to about 23.0 $\mu$m or from about 7.0 $\mu$m to about 20.0 $\mu$m or from about 10.0 $\mu$m to about 20.0 $\mu$m or from about 12.0 $\mu$m to about 20.0 $\mu$m or from about 7.0 $\mu$m to about 18.0 $\mu$m or from about 10.0 $\mu$m to about 18.0 $\mu$m or from about 12.0 $\mu$m to about 18.0 $\mu$m.

In particular embodiments, the talc particulate has a $d_{95laser}$ equal to or less than about 20.0 $\mu$m and equal to or greater than about 7.0 $\mu$m. For example, the talc particulate may have a $d_{95laser}$ ranging from about 10.0 $\mu$m to about 20.0 $\mu$m or from about 12.0 $\mu$m to about 20.0 $\mu$m or from about 7.0 $\mu$m to about 18.0 $\mu$m or from about 10.0 $\mu$m to about 18.0 $\mu$m or from about 12.0 $\mu$m to about 18.0 $\mu$m.

The talc particulate may, for example, have a $d_{50laser}$ equal to or less than about 12.0 $\mu$m . For example, the talc particulate may have a decker equal to or less than about 11.0 $\mu$m or equal to or less than about 10.0 $\mu$m or equal to or less than about 9.0 $\mu$m or equal to or less than about 8.0 $\mu$m.

The talc particulate may, for example, have a $d_{50laser}$ equal to or greater than about 2.0 $\mu$m. For example, the talc particulate may have a decker equal to or greater than about 3.0 $\mu$m or equal to or greater than about 4.0 $\mu$m or equal to or greater than about 5.0 $\mu$m or equal to or greater than about 6.0 $\mu$m.

The talc particulate may have a decker ranging from about 2.0 $\mu$m to about 12.0 $\mu$m or from about 2.0 $\mu$m to about 10.0 $\mu$m or from about 3.0 $\mu$m to about 10.0 $\mu$m or from about 4.0 $\mu$m to about 10.0 $\mu$m or from about 2.0 $\mu$m to about 8.0 $\mu$m or from about 3.0 $\mu$m to about 8.0 $\mu$m or from about 4.0 $\mu$m to about 8.0 $\mu$m or from about 6.0 $\mu$m to about 8.0 $\mu$m .

In particular embodiments, the talc particulate has a $d_{50laser}$ equal to or greater than about 2.0 $\mu$m and equal to or less than about 8.0 $\mu$m. For example, the talc particulate may have a decker ranging from about 2.0 $\mu$m to about 8.0 $\mu$m or from about 3.0 $\mu$m to about 8.0 $\mu$m or from about 4.0 $\mu$m to about 8.0 $\mu$m or from about 5.0 $\mu$m to about 8.0 $\mu$m or from about 6.0 $\mu$m to about 8.0 $\mu$m .

The talc particulate may, for example, have a $d_{75laser}$ equal to or less than about 15.0 $\mu$m . The talc particulate

may, for example, have a $d_{75laser}$ equal to or less than about 14.0 $\mu$m or equal to or less than about 13.0 $\mu$m or equal to or less than about 12.0 $\mu$m or equal to or less than about 11.0 $\mu$m or equal to or less than about 10.0 $\mu$m or equal to or less than about 9.0 $\mu$m or equal to or less than about 8.0 $\mu$m.

The talc particulate may, for example, have a $d_{75laser}$ equal to or greater than about 4.0 $\mu$m . For example, the talc particulate may have a $d_{75laser}$ equal to or greater than about 4.5 $\mu$m or equal to or greater than about 5.0 $\mu$m or equal to or greater than about 5.5 $\mu$m or equal to or greater than about 6.0 $\mu$m.

The talc particulate may, for example, have a $d_{75laser}$ ranging from about 4.0 $\mu$m to about 15.0 $\mu$m or from about 4.0 $\mu$m to about 12.0 $\mu$m or from about 4.0 $\mu$m to about 10.0 $\mu$m or from about 5.0 $\mu$m to about 10.0 $\mu$m .

The talc particulate may, for example, have a $d_{25laser}$ equal to or less than about 6.0 $\mu$m . The talc particulate may, for example, have a $d_{25laser}$ equal to or less than about 5.5 $\mu$m or equal to or less than about 5.0 $\mu$m or equal to or less than about 4.5 $\mu$m.

The talc particulate may, for example, have a $d_{25laser}$ equal to or greater than about 1.0 $\mu$m. For example, the talc particulate may have a $d_{25laser}$ equal to or greater than about 1.5 $\mu$m or equal to or greater than about 2.0 $\mu$m or equal to or greater than about 2.5 $\mu$m or equal to or greater than about 3.0 $\mu$m.

For example, the talc particulate may have a $d_{25laser}$ ranging from about 1.0 $\mu$m to about 6.0 $\mu$m or from about 1.5 $\mu$m to about 5.0 $\mu$m or from about 2.0 $\mu$m to about 4.5 $\mu$m .

The talc particulate may, for example, have a $d_{95sedi}$ equal to or less than about 10.0 $\mu$m . For example, the talc particulate may have a $d_{95sedi}$ equal to or less than about 9.0 $\mu$m or equal to or less than about 8.0 $\mu$m or equal to or less than about 7.0 $\mu$m or equal to or less than about 6.0 $\mu$m or equal to or less than about 5.0 $\mu$m.

The talc particulate may, for example, have a $d_{95sedi}$ equal to or greater than about 1.0 $\mu$m . For example, the talc particulate may have a $d_{95sedi}$ equal to or greater than about 1.5 $\mu$m or equal to or greater than about 2.0 $\mu$m or equal to or greater than about 2.5 $\mu$m or equal to or greater than about 3.0 $\mu$m or equal to or greater than about 3.5 $\mu$m or equal to or greater than about 4.0 $\mu$m.

The talc particulate may, for example, have a $d_{95sedi}$ ranging from about 1.0 $\mu$m to about 10.0 $\mu$m or from about 1.0 $\mu$m to about 8.0 $\mu$m or from about 1.0 $\mu$m to about 6.0 $\mu$m or from about 1.0 $\mu$m to about 5.0 $\mu$m or from about 2.5 $\mu$m to about 10.0 $\mu$m or from about 2.5 $\mu$m to about 8.0 $\mu$m or from about 2.5 $\mu$m to about 6.0 $\mu$m or from about 2.5 $\mu$m to about 5.0 $\mu$m .

In particular embodiments, the talc particulate has a $d_{95sedi}$ equal to or less than about 6.5 $\mu$m. For example, the talc particulate may have a $d_{95sedi}$ equal to or less than about 6.0 $\mu$m or equal to or less than about 5.5 $\mu$m or equal to or less than about 5.0 $\mu$m . For example, the talc particulate may have a $d_{95sedi}$ equal to greater than about 1.0 $\mu$m or equal to or greater than about 2.0 $\mu$m or equal to or greater than about 2.5 $\mu$m . For example, the talc particulate may have a $d_{95sedi}$ ranging from about 1.0 $\mu$m to about 6.5 $\mu$m or from about 1.0 $\mu$m to equal to or less than about 5.0 $\mu$m or from about 2.5 $\mu$m to about 6.5 $\mu$m or from about 2.5 $\mu$m to about equal to or less than about 5.0 $\mu$m.

In particular embodiments, the talc particulate has a $d_{95sedi}$ equal to or greater than about 1.0 $\mu$m and equal to or less than about 5.0 $\mu$m. For example, the talc particulate may have a $d_{95sedi}$ ranging from about 2.0 $\mu$m to equal to or less than about 5.0 $\mu$m or from about 2.5 $\mu$m to equal to or less than about 5.0 $\mu$m.

The talc particulate may, for example, have a $d_{50sedi}$ equal to or less than about 5.0 $\mu$m. For example, the talc particulate may have a $d_{50sedi}$ equal to or less than about 4.5 $\mu$m or equal to or less than about 4.0 $\mu$m or equal to or less than about 3.5 $\mu$m or equal to or less than about 3.0 $\mu$m or equal to or less than about 2.5 $\mu$m or equal to or less than about 2.0 $\mu$m .

The talc particulate may, for example, have a $d_{50sedi}$ equal to or greater than about 0.5 $\mu$m or equal to or greater than about 1.0 $\mu$m or equal to or greater than about 1.5 $\mu$m .

The talc particulate may, for example, have a $d_{50sedi}$ ranging from about 0.5 $\mu$m to about 5.0 $\mu$m or from about 0.5 $\mu$m to about 4.0 $\mu$m or from about 0.5 $\mu$m to about 3.0 $\mu$m or from about 0.5 $\mu$m to about 2.5 $\mu$m or from about 0.5 $\mu$m to about 2.0 $\mu$m .

In particular embodiments, the talc particulate has a $d_{50sedi}$ ranging from about 0.5 $\mu$m to about 2.5 $\mu$m.

The talc particulate may, for example, have a $d_{75sedi}$ equal to or less than about 6.0 $\mu$m. For example, the talc particulate may have a $d_{75sedi}$ equal to or less than about 5.0 $\mu$m or equal to or less than about 4.0 $\mu$m or equal to or less than about 3.0 $\mu$m .

The talc particulate may, for example, have a $d_{75sedi}$ equal to or greater than about 1.0 $\mu$m . For example, the talc particulate may have a $d_{75sedi}$ equal to or greater than about 1.5 $\mu$m or equal to or greater than about 2.0 $\mu$m .

The talc particulate may, for example, have a $d_{75sedi}$ ranging from about 1.0 $\mu$m to about 6.0 $\mu$m or from about 1.0 $\mu$m to about 4.0 $\mu$m or from about 1.0 $\mu$m to about 3.0 $\mu$m .

The talc particulate may, for example, have a $d_{25sedi}$ equal to or less than about 2.0 $\mu$m. For example, the talc particulate may have a $d_{25sedi}$ equal to or less than about 1.5 $\mu$m or equal to or less than about 1.0 $\mu$m .

The talc particulate may, for example, have a $d_{25sedi}$ equal to or greater than about 0.1 $\mu$m . For example, the talc particulate may have a $d_{25sedi}$ equal to or greater than about 0.2 $\mu$m or equal to or greater than about 0.5 $\mu$m .

The talc particulate may, for example, have a $d_{25sedi}$ ranging from about 0.1 $\mu$m to about 2.0 $\mu$m or from about

0.2 $\mu$m to about 1.0 $\mu$m or from about 0.5 $\mu$m to about 1.0 $\mu$m .

The decomposition temperature of the talc particulate (decomposition from talc to entstatite) of the present invention may, for example, be decreased compared to the decomposition temperature of a talc particulate not in accordance with the present invention. For example, the decomposition temperature of the talc particulate of the invention may be decreased by at least about 10°C compared to a talc particulate not in accordance with the present invention. For example, the decomposition temperature of the talc particulate of the invention may be decreased by at least about 15°C or at least about 20°C or at least about 25°C or at least about 30°C compared to a talc particulate not in accordance with the present invention. For example, the decomposition temperature may be decreased by up to about 200°C compared to a talc particulate not in accordance with the present invention. For example, the decomposition temperature may be decreased by up to about 180°C or up to about 160°C or up to about 150°C or up to about 140°C or up to about 120°C or up to about 100°C compared to a talc particulate not in accordance with the present invention. The talc particulate not in accordance with the present invention may, for example, be a commercial talc particulate such as Luzenac HAR T84 talc®. Luzenac HAR T84 talc® has a $d_{50sedi}$ of about 1.9 $\mu$m , a $d_{95sedi}$ of about 10.5 $\mu$m , a $d_{50laser}$ of about 10.5 $\mu$m, a $d95_{laser}$ of about 32.1 $\mu$m, a BET surface area of about 19.4 $m^2$/g, about 130 TOT layers, a shape factor of about 123 and a DI(TOT) of about 95. Decomposition temperature may, for example, be measured by thermogravimetric analysis (TGA) at temperatures ranging from 50°C to 1000°C under $N_2$ flow and an increased temperature rate of 10°C/min.

The cation exchange capacity (CEC) of the talc particulate of the present invention may, for example, be increased compared to the CEC of a talc particulate not in accordance with the present invention. For example, the CEC of the talc particulate of the invention may be increased by about 5% compared to a talc particulate not in accordance with the present invention. For example, the CEC of the talc particulate of the invention may be increased by about 10% or by about 15% or by about 20% or by about 25% compared to a talc particulate not in accordance with the present invention. For example, the CEC of the talc particulate may be increased by up to about 50% or up to about 45% or up to about 40% or up to about 35% or up to about 30% compared to a talc particulate not in accordance with the present invention. The talc particulate not in accordance with the present invention may, for example, be a commercial talc particulate such as Luzenac HAR T84 talc®. Luzenac HAR T84 talc® has a $d_{50sedi}$ of about 1.9 $\mu$m , a $d_{95sedi}$ of about 10.5 $\mu$m , a $d_{50laser}$ of about 10.5 $\mu$m , a $d_{95laser}$ of about 32.1 $\mu$m, a BET surface area of about 19.4 $m^2$/g, about 130 TOT layers, a shape factor of about 123 and a DI(TOT) of about 95. CEC may, for example, be measured by ISO 11260 or AFNOR NFX 31-130.

*Particle Surface Properties*

BET surface area refers to the area of the surface of the particles of the talc particulate with respect to unit mass, determined according to the BET method by the quantity of nitrogen adsorbed on the surface of said particles so as to form a monomolecular layer completely covering said surface (measurement according to the BET method, AFNOR standard X11-621 and 622 or ISO 9277). Details of the BET specific surface area measurement method used in the preparation of the present application are set out in the Examples.

The talc particulate may, for example, have a BET surface area equal to or greater than about 15 $m^2$/g. For example, the talc particulate may have a BET surface area equal to or greater than about 16 $m^2$/g or equal to or greater than about 17 $m^2$/g or equal to or greater than about 18 $m^2$/g or equal to or greater than about 19 $m^2$/g or equal to or greater than about 20 $m^2$/g or equal to or greater than about 21 $m^2$/g or equal to or greater than about 22 $m^2$/g.

The talc particulate may, for example, have a BET surface area equal to or less than about 30 $m^2$/g. For example, the talc particulate may have a BET surface area equal to or less than about 29 $m^2$/g or equal to or less than about 28 $m^2$/g or equal to or less than about 27 $m^2$/g or equal to or less than about 26 $m^2$/g or equal to or less than about 25 $m^2$/g.

The talc particulate may, for example, have a BET surface area ranging from about 15 $m^2$/g to about 30 $m^2$/g or from about 17 $m^2$/g to about 30 $m^2$/g or from about 20 $m^2$/g to about 28 $m^2$/g or from about 20 $m^2$/g to about 25 $m^2$/g.

The oil absorption of a talc particulate may be determined according to ASTM-D 1483-95 or ISO 787-5 using linseed oil. The oil absorption in weight percentage may be calculated as follows:

$$Oil\ Absorption\ (wt.\%) = \frac{Volume\ Oil\ Used\ (mL)\ x\ Specific\ Gravity\ of\ Oil}{Weight\ of\ Sample\ (g)}\ x\ 100$$

The oil absorption in ml/100g may be calculated as follows:

$$Oil\ Absorption\ (mL/100g) = \frac{Volume\ Oil\ Used\ (mL)}{Weight\ of\ Sample\ (g)}\ x\ 100$$

Details of the oil absorption measurement method used in the preparation of the present application are set out in the Examples.

The talc particulate may, for example, have an oil absorption equal to or greater than about 65 mL/100 g. For example, the talc particulate may have an oil absorption equal to or greater than about 66 mL/100 g or equal to or greater than about 67 mL/100 g or equal to or greater than about 68 mL/100 g or equal to or greater than about 69 mL/100 g or equal to or greater than about 70 mL/100 g.

The talc particulate may, for example, have an oil absorption equal to or less than about 100 mL/100 g. For example, the talc particulate may have an oil absorption equal to or less than about 90 mL/100 g or equal to or less than about 80 mL/100 g or equal to or less than about 75 mL/100 g.

The talc particulate may, for example, have an oil absorption ranging from about 65 mL/100 g to about 100 mL/100 g or from about 68 mL/100 g to about 100 mL/100 g or from about 65 mL/100 g to about 80 mL/100 g or from about 68 mL/100 g to about 80 mL/100 g or from about 68 mL/100 g to about 75 mL/100 g.

Contact angle may be measured using FibroDat equipment, for example DAT Dynamic Absorption Tester Model 68-96, for example in accordance with TAPPI T558 & ASTM D-5725, wherein the test liquid is water. Details of the contact angle measurement method used in the preparation of the present application are set out in the Examples.

The talc particulate may, for example, have a contact angle equal to or less than about 43°. For example, the talc particulate may have a contact angle equal to or less than about 42° or equal to or less than about 41° or equal to or less than about 40° or equal to or less than about 39° or equal to or less than about 38°.

The talc particulate may, for example, have a contact angle equal to or greater than about 33°. For example, the talc particulate may have a contact angle equal to or greater than about 34° or equal to or greater than about 35° or equal to or greater than about 36°.

The talc particulate may, for example, have a contact angle ranging from about 33° to about 43° or from about 33° to about 40° or from about 35° to about 40°.

*Optional Surface Treatment*

In certain embodiments, the talc particulate is treated with a surface treatment agent. Surface treated talc may, for example, be referred to as coated talc. Surface treatment of the talc may serve to reduce or eliminate aggregation of the talc particulates and/or enhance incorporation of the talc particulate into a polymer composition.

In certain embodiments, the talc particulate is not treated with a surface treatment agent (uncoated talc).

In certain embodiments, the surface treatment agent includes (e.g. is) a compound with hydrophobic carbon chains bearing polar radicals, for example, the family of amines, silanes, siloxanes, alcohols or acids and metals salts thereof.

In certain embodiments, the surface treatment agent comprises (e.g. is) a substituted succinic anhydride or a derivative thereof, such as a mono-substituted succinic anhydride or a derivative thereof. For example, the surface treatment agent may comprise (e.g. be) an alkenyl mono-substituted succinic anhydride (ASA) or a derivative thereof.

In certain embodiments, the surface treatment agent comprises (e.g. is) a polyalkylene-polyvinyl acetate copolymer or a derivative thereof, such as an ethylene-vinyl acetate copolymer or a derivative thereof.

In certain embodiments, the surface treatment agent comprises (e.g. is) a polylactide-based copolymer or a derivative thereof, such as a polylactide-polyglycolide copolymer, otherwise known as poly(lactic-co-glycolic acid) (PLGA), or a derivative thereof. The surface treatment agent may comprise (e.g. be) a polylactide-polyglycolide copolymer which has been functionalised with a carboxylic acid or an alkoxysilane group (i.e. PLGA-carboxylic acid or PLGA-alkoxysilane) or a derivative thereof.

In certain embodiments, surface treatment agent comprises (e.g. is) a polyether or a derivative thereof, for example, polyether modified polysiloxane.

In certain embodiments, the polyether is a polyoxyalkylene (POA), for example, polyalkylene glycol (PAG) or polyalkylene oxide (PAO). As used herein, the term 'polyalkylene glycol' means a POA having a number average molecular mass below 20,000 g/mol, and the term 'polyalkylene oxide' means a POA having a number average molecular mass above 20,000 g/mol. In certain embodiments, the surface treatment agent comprises or is a polyalkylene glycol having a number average molecular mass of from about 100 to about 15,000 g/mo, for example, from about 200 to about 10,000 g/mol, or from about 500 to about 9000 g/mol, or from about 1000 to about 9000 g/mol, or from about 2000 to about 900 g/mol, or from about 4000 to about 9000 g/mol, or from about 6000 to about 9000 g/mol, or from about 6000 to about 8500 g/mol.

In certain embodiments, the polyether is a polyalkylene oxide selected from one or more of paraformaldehyde (polymethylene oxide), polytetramethylene glycol, polytetramethylene ether glycol, polyethylene oxide, polypropylene oxide, polybutylene oxide, and combinations thereof.

In certain embodiments, the surface treatment agent comprises or is polyethylene glycol. In certain embodiments, the surface treatment comprises or is a mixture of polyethylene glycol and polypropylene glycol (PPG). In certain embodiments, the surface treatment agent is polyethylene glycol having a number average molecular mass of from about 200 to about 10,000 g/mol, for example, from about 500 to about 9000 g/mol, or from about 1000 to about 9000 g/mol, or from about 2000 to about 900 g/mol, or from about 4000 to about 9000 g/mol, or from about 6000 to about 9000 g/mol, or from about 6000 to about 8500 g/mol. An exemplary PEG includes the Puriol™ range of polyglycols from BASF, for example, Puriol™ 8005.

In certain embodiments, the surface treatment agent comprises or is a fatty acid, and/or a metal salt thereof, for example, stearic acid or a metal stearate, such as magnesium, calcium or zinc stearate. This includes fatty acids having a carbon chain length from C8 to C24 and mixtures of fatty acids having a carbon chain length from C8 to C24.

Suitable silane based agents are aminosilanes, for example, trimethoxysilyl ethyl amine, triethoxysilyl ethyl amine, tripropoxysilyl ethyl amine, tributoxysilyl ethyl amine, trimethoxysilyl propyl amine, triethoxysilyl propyl amine, tripropoxysilyl propyl amine, triisopropoxysilyl propyl amine, tributoxysilyl propyl amine, trimethoxysilyl butyl amine, triethoxysilyl butyl amine, tripropoxysilyl butyl amine, tributoxysilyl butyl amine, trimethoxysilyl pentyl amine, triethoxysilyl pentyl amine, tripropoxysilyl pentyl amine, tributoxysilyl pentyl amine, trimethoxysilyl hexyl amine, triethoxysilyl hexyl amine, tripropoxysilyl hexyl amine, tributoxysilyl hexyl amine, trimethoxysilyl heptyl amine, triethoxysilyl heptyl amine, tripropoxysilyl heptyl amine, tributoxysilyl heptyl amine, trimethoxysilyl octyl amine, triethoxysilyl octyl amine, tripropoxysilyl octyl amine, tributoxysilyl octyl amine, and the like. Suitable agents having a hydrocarbyl group and a polar group are hydrocarbyl amines such as triethanolamine (TEA), and amino alcohol agents such as 2-amino-2-methyl-1-propanol. AMP-95® is a commercially available 2-amino-2-methyl-1-propanol formulation containing 5% water.

The surface treatment agent may be added in an amount effective to achieve the desired result. In certain embodiments, the quantity of surface treatment agent is from about 0.1 % to 5 % by weight with respect to the weight of talc, for example, from about 0.1 % to 2 % by weight with respect to the weight of talc.

Surface treatment agents may be applied by adding to the talc particulate and mixing using conventional methods. Surface treatment agents may be applied during preparation of the talc particulate from a relatively coarse talc starting material and before the talc particulate is added to a polymer composition.

Method for Making the Talc Particulate

There is also provided herein a method for making a talc particulate, the method comprising classifying a feed talc material to remove a portion of the largest particles in the feed talc material, wherein the feed talc material has one or more of the following:

    (a) a lamellarity index equal to or greater than about 2.5;
    (b) a $d_{95sedi}$ equal to or less than about 15.0 $\mu$m;
    (c) a $d_{95laser}$ equal to or less than about 40.0 $\mu$m;
    (d) a $d_{50sedi}$ equal to or less than about 5.0 $\mu$m;
    (e) a shape factor equal to or greater than about 40;
    (f) a BET surface area equal to or greater than about 10 $m^2$/g.

The talc particulate may be in accordance with any aspect or embodiment described herein.

Classification refers to a process in which particles of the feed talc material are separated by size. Classification may, for example, take place by any suitable method including, for example, air classification, sieve analysis and sedimentation. The classification may, for example, be dry classification.

In the method described herein a portion of the largest particles of the feed talc material are removed. Thus, the talc particulate of the present invention is the fine talc particles that remain after the larger particles are removed.

In other words, the feed talc material can be classified to split the material into two fractions. The fine fraction is the talc particulate of the present invention. The coarse fraction is a by-product.

The proportion of larger particles that are removed can be selected depending on the target particle size distribution for the talc particulate. For example, from about 10 wt.% to about 95 wt.% of the largest particles may be removed to make the talc particulate. For example, from about 20 % to about 95 wt.% or from about 30 wt.% to about 95 wt.% or from about 40 wt.% to about 95 wt.% or from about 50 wt.% to about 95 wt.% or from about 60 wt.% to about 95 wt.% or from about 70 wt.% to about 95 wt.% or from about 80 wt.% to about 95 wt.% or from about 80 wt.% to about 90 wt.% of the largest particles may be removed to make the talc particulate.

The amount of the fine fraction may be directly correlated to the speed of the classifying turbine. The faster the classifier speed, the smaller the fine product yield (%). The faster the classifier speed, the lower the top cut (e.g. $d_{95}$ or

$d_{98}$) of the fine fraction. Thus, the speed of the classifying turbine can be adjusted depending on the desired particle size and product yield.

Where the feed talc material is a dry compacted grade, the feed talc material may be pulverized prior to classification. Pulverization can be performed using equipment such as an attritor mill, a pin mill, a long gap mill, or a low pressure jet mill. The pulverization assists to deagglomerate the compacted feed talc material such that the feed talc material following pulverization is composed exclusively of independent particles (rather than agglomerates).

Exemplary system operating parameters for the pulverization methods described above are provided in the tables below.

| Attritor | Twin screw speed (Hz) | Besta speed (%) | Mill speed (rpm) | Burner temperature (°C) | Product outlet temperature (°C) | Air flowrate (m³/h) | Cyclone (nbr) |
|---|---|---|---|---|---|---|---|
| Range | 0-80 | 0-40 | 0-1725 | 0-250 | 90-120 | 0-4000 | 1-2 |
| Example Trial value | 80 (3 kg/min) | 35 | 1725 | 250 | 105- 120 | 2500 | 1 |

| Pin mill | Vibrating feeder height | Rotating speed (rpm) | Cyclone (nbr) |
|---|---|---|---|
| Range | 3-24 | 5000 - 20000 | 1 |
| Example Trial value | 6 | 5000, 8000, 12000, 16000 | 1 |

| Long gap Mill | Feed rate (kg/h) | Rotating speed (rpm) | Cyclone (nbr) | Burner temperature (°C) | Blades (nbr) | Additive coating (pump rpm) |
|---|---|---|---|---|---|---|
| Range | 0-400 | 0 - 6000 | 1 -2 | 0-150 | 0-16 | 10-150 (viscosity < 1000 cP -> 5rpm = 21.2g) |
| Example Trial value | 300 | 3000, 6000 | 2 | 0 | 16 | 0 |

| Jetmill | Feedrate (kg/h) | Pressure (bar) | Classifying speed (rpm) | Nozzle diameter (mm) |
|---|---|---|---|---|
| Range | 0-200 | 0- 10 | 0 - 8000 | 10-28 |
| Trial value | 110- 160 | 0,5 - 1 | 1000-1300 | 10-28 |

The feed talc material may, for example, have a bi-modal particle size distribution curve (having 2 peaks) prior to pulverization. The pulverization may, for example, transform the bimodal particle size distribution curve into a mono-modal particle size distribution curve (having 1 peak).

*Feed Talc Material*

The feed talc material used to make the talc particulate of the present invention may have one or more of the following:

(a) a lamellarity index equal to or greater than about 2.5;
(b) a $d_{95sedi}$ equal to or less than about 15.0 $\mu$m;
(c) a $d_{95laser}$ equal to or less than about 40.0 $\mu$m;
(d) a $d_{50sedi}$ equal to or less than about 5.0 $\mu$m;
(e) a $d_{50laser}$ equal to or less than about 15.0 $\mu$m;
(f) a shape factor equal to or greater than about 40;

(g) a BET surface area equal to or greater than about 10 m$^2$/g;
(h) a DI(TOT) equal to or less than about 102;
(i) equal to or greater than about 110 TOT layers.

For example, the feed talc material may have two or more, three or more, four or more, five or more, or six or more, or seven or more, or eight or more, or nine of properties (a) to (i).

The particle shape, size and surface properties of the feed talc material may be measured in the same way as for the talc particulate of the present invention described herein.

The feed talc material may, for example, have a lamellarity index equal to or greater than about 2.5 or equal to or greater than about 2.8 or equal to or greater than about 3.0 or equal to or greater than about 3.5 or equal to or greater than about 4.0 or equal to or greater than about 4.5. The feed talc material may, for example, have a lamellarity index equal to or less than about 8.0 or equal to or less than about 7.0 or equal to or less than about 6.0. For example, the feed talc material may have a lamellarity index ranging from about 2.8 to about 8.0 or from about 3.0 to about 7.0 or from about 4.0 to about 6.0.

The feed talc material may, for example, have a $d_{95sedi}$ equal to or less than about 15.0 $\mu$m . For example, the feed talc material may have a $d_{95sedi}$ equal to or less than about 14.0 $\mu$m or equal to or less than about 13.0 $\mu$m or equal to or less than about 12.0 $\mu$m. The feed talc material may, for example, have a $d_{95sedi}$ equal to or greater than about 8.0 $\mu$m or equal to or greater than about 9.0 $\mu$m or equal to or greater than about 10.0 $\mu$m . For example, the feed talc material may have a $d_{95sedi}$ ranging from about 8.0 $\mu$m to about 15.0 $\mu$m or from about 10.0 $\mu$m to about 15.0 $\mu$m or from about 10.0 $\mu$m to about 12.0 $\mu$m .

The feed talc material may, for example, have a $d_{50sedi}$ equal to or less than about 5.0 $\mu$m . For example, the feed talc material may have a $d_{50sedi}$ equal to or less than about 4.0 $\mu$m or equal to or less than about 3.0 $\mu$m or equal to or less than about 2.0 $\mu$m . The feed talc material may, for example, have a $d_{50sedi}$ equal to or greater than about 0.5 $\mu$m or equal to or greater than about 1.0 $\mu$m or equal to or greater than about 1.5 $\mu$m . For example, the feed talc material may have a $d_{50sedi}$ ranging from about 0.5 $\mu$m to about 5.0 $\mu$m or from about 1.0 $\mu$m to about 3.0 $\mu$m.

The feed talc material may, for example, have a $d_{95laser}$ equal to or less than about 40.0 $\mu$m . For example, the feed talc material may have a $d_{95laser}$ equal to or less than about 38.0 $\mu$m or equal to or less than about 36.0 $\mu$m or equal to or less than about 35.0 $\mu$m or equal to or less than about 34.0 $\mu$m. The feed talc material may, for example, have a $d_{95laser}$ equal to or greater than about 20.0 $\mu$m or equal to or greater than about 25.0 $\mu$m or equal to or greater than about 30.0 $\mu$m . For example, the feed talc material may have a $d_{95sedi}$ ranging from about 20.0 $\mu$m to about 40.0 $\mu$m or from about 25.0 $\mu$m to about 35.0 $\mu$m or from about 30.0 $\mu$m to about 35.0 $\mu$m.

The feed talc material may, for example, have a $d_{50laser}$ equal to or less than about 15.0 $\mu$m . For example, the feed talc material may have a $d_{50laser}$ equal to or less than about 14.0 $\mu$m or equal to or less than about 13.0 $\mu$m or equal to or less than about 12.0 $\mu$m or equal to or less than about 11.0 $\mu$m. The feed talc material may, for example, have a $d_{50laser}$ equal to or greater than about 8.0 $\mu$m or equal to or greater than about 9.0 $\mu$m or equal to or greater than about 10.0 $\mu$m. For example, the feed talc material may have a $d_{50laser}$ ranging from about 8.0 $\mu$m to about 15.0 $\mu$m or from about 9.0 $\mu$m to about 12.0 $\mu$m .

The feed talc material may, for example, have a shape factor equal to or greater than about 40. For example, the feed talc material may have a shape factor equal to or greater than about 60 or equal to or greater than about 80 or equal to or greater than about 100 or equal to or greater than about 120. The feed talc material may, for example, have a shape factor equal to or less than about 200 or equal to or less than about 180 or equal to or less than about 160 or equal to or less than about 140 or equal to or less than about 130. For example, the feed talc material may have a shape factor ranging from about 40 to about 200 or from about 80 to about 180 or from about 100 to about 160 or from about 110 to about 140 or from about 120 to about 130.

The feed talc material may, for example, have a BET surface area equal to or greater than about 10 m$^2$/g. For example, the feed talc material may have a BET surface area equal to or greater than about 12 m$^2$/g or equal to or greater than about 14 m$^2$/g or equal to or greater than about 15 m$^2$/g or equal to or greater than about 16 m$^2$/g or equal to or greater than about 18 m$^2$/g. The feed talc material may, for example, have a BET surface area equal to or less than about 30 m$^2$/g or equal to or less than about 25 m$^2$/g or equal to or less than about 20 m$^2$/g. For example, the feed talc material may have a BET surface area ranging from about 10 m$^2$/g to about 30 m$^2$/g or from about 12 m$^2$/g to about 25 m$^2$/g or from about 14 m$^2$/g to about 23 m$^2$/g or from about 16 m$^2$/g to about 20 m$^2$/g. The feed talc material may, for example have a DI(TOT) equal to or less than about 102. For example, the feed talc material may have a DI(TOT) equal to or less than about 100 or equal to or less than about 99 or equal to or less than about 98 or equal to or less than about 97 or equal to or less than about 96 or equal to or less than about 95. The feed talc material may, for example, have a DI(TOT) equal to or greater than about 80 or equal to or greater than about 85 or equal to or greater than about 90. For example, the feed talc material may have a DI(TOT) ranging from about 80 to about 102 or from about 85 to about 98 or from about 90 to about 97.

The feed talc material may, for example, have equal to or greater than about 110 TOT layers. For example, the feed talc material may have equal to or greater than about 115 TOT layers or equal to or greater than about 120 TOT layers or equal to or greater than about 125 TOT layers or equal to or greater than about 130 TOT layers. The feed talc material may, for example, have equal to or less than about 150 or equal to or less than about 145 or equal to or less than about 140 TOT layers. For example, the feed talc material may have from about 110 to about 150 or from about 120 to about 150 TOT layers or from about 125 to about 145 TOT layers.

For example, where the feed talc material has not been pulverized, the feed talc material may have equal to or greater than about 120 TOT layers. For example, where the feed talc material has not been pulverized, the feed talc material may have equal to or greater than about 125 TOT layers or equal to or greater than about 130 TOT layers. For example, where the feed talc material has not been pulverized, the feed talc material may have equal to or less than about 150 or equal to or less than about 145 or equal to or less than about 140 TOT layers.

For example, where the feed talc material has been pulverized, the feed talc material may have less than about 120 TOT layers, for example between about 110 and about 120 TOT layers or between about 115 and about 120 TOT layers.

The feed talc material may, for example, have one or more of the following:

(a) a $d_{50sedi}$ of about 2 $\mu$m ;
(b) a $d_{95sedi}$ of about 9 $\mu$m to about 10 $\mu$m;
(c) a $d_{50laser}$ of about 10 $\mu$m;
(d) a $d_{95laser}$ of about 32 $\mu$m;
(e) a BET surface area of about 12 $m^2$/g to about 20 $m^2$/g;
(f) about 130 TOT layers;
(g) a shape factor of about 123;
(h) a DI(TOT) of about 95;
(i) a lamellarity index of about 4.

Polymer Composition

The talc particulates described herein may be used as a filler in a polymer composition comprising a bioplastic polymer.

The talc particulate may be used as an extender filler or a functional filler. As used herein, the term "functional filler" is understood to mean an additive incorporated into a polymer composition with a view to enhancing one or more of its physical (e.g., mechanical) properties. An "extender filler" typically modifies the properties of the polymer composition very little and essentially serves to reduce cost.

Thus, there is provided herein a polymer composition comprising a bioplastic polymer and a talc particulate as described herein.

In certain embodiments, the talc particulate may be used as a functional filler in the polymer composition, for example, to modify or enhance one or more mechanical properties of the polymer composition.

In certain embodiments, the talc particulate is used as an extender filler, for example, to supplement or supplant other filler materials, which may be more expensive or more difficult to incorporate into the polymer composition.

The polymer composition may comprise no less than about 0.1 wt. %, for example, no less than about 0.5 wt. %, or no less than about 1 wt. %, or no less than about 2 wt. %, or no less than about 3 wt. %, or no less than about 4 wt. %, or no less than about 5 wt. %, or no less than about 6 wt. %, or no less than about 7 wt. %, or no less than about 8 wt. %, or no less than about 9 wt. %, or no less than about 10 wt. %, or no less than about 11 wt. %, or no less than about 12 wt. %, or no less than about 13 wt. %, or no less than about 14 wt. %, or no less than about 15 wt. %, or no less than about 16 wt. %, or no less than about 17 wt. %, or no less than about 18 wt. %, or no less than about 19 wt. %, or no less than about 20 wt. %, of the talc particulate (based on the total weight of the polymer composition).

The polymer composition may comprise no greater than about 30 wt. %, for example, no greater than about 25 wt. %, or no greater than about 24 wt. %, or no greater than about 23 wt. %, or no greater than about 22 wt. %, or no greater than about 21 wt. %, or no greater than about 20 wt. %, or no greater than about 19 wt. %, or no greater than about 18 wt. %, or no greater than about 17 wt. %, or no greater than about 16 wt. %, or no greater than about 15 wt. %, or no greater than about 14 wt. %, or no greater than about 13 wt. %, or no greater than about 12 wt. %, or no greater than about 11 wt. %, or no greater than about 10 wt. %, or no greater than about 9 wt. %, or no greater than about 8 wt. %, or no greater than about 7 wt. %, or no greater than about 6 wt. %, or no greater than about 5 wt. %, or no greater than about 4 wt. %, or no greater than about 3 wt. %, or no greater than about 2 wt. %, of the talc particulate (based on the total weight of the polymer composition).

The polymer composition may comprise from about 0.1 wt. % to about 30 wt. %, for example, from about 0.1 wt. % to about 25 wt. %, or from about 0.1 wt. % to about 24 wt. %, or from about 0.1 wt. % to about 23 wt. %, or from about 0.1 wt. % to about 22 wt. %, or from about 0.1 wt. % to about 21 wt. %, or from about 0.1 wt. % to about 20 wt.

%, or from about 0.1 wt. % to about 19 wt. %, or from about 0.1 wt. % to about 18 wt. %, or from about 0.1 wt. % to about 17 wt. %, or from about 0.1 wt. % to about 16 wt. %, or from about 0.1 wt. % to about 15 wt. %, or from about 0.1 wt. % to about 14 wt. %, or from about 0.1 wt. % to about 13 wt. %, or from about 0.1 wt. % to about 12 wt. %, or from about 0.1 wt. % to about 11 wt. %, or from about 0.1 wt. % to about 10 wt. %, or from about 0.1 wt. % to about 9 wt. %, or from about 0.1 wt. % to about 8 wt. %, or from about 0.1 wt. % to about 7 wt. %, or from about 0.1 wt. % to about 6 wt. %, or from about 0.1 wt. % to about 5 wt. %, or from about 0.1 wt. % to about 4 wt. %, or from about 0.1 wt. % to about 3 wt. %, or from about 0.1 wt. % to about 2 wt. %, or from about 0.1 wt. % to about 1 wt. %, or from about 0.1 wt. % to about 0.4 wt. %, or from about 0.5 wt. % to about 30 wt. %, or from about 0.5 wt. % to about 25 wt. %, or from about 0.5 wt. % to about 24 wt. %, or from about 0.5 wt. % to about 23 wt. %, or from about 0.5 wt. % to about 22 wt. %, or from about 0.5 wt. % to about 21 wt. %, or from about 0.5 wt. % to about 20 wt. %, or from about 0.5 wt. % to about 19 wt. %, or from about 0.5 wt. % to about 18 wt. %, or from about 0.5 wt. % to about 17 wt. %, or from about 0.5 wt. % to about 16 wt. %, or from about 0.5 wt. % to about 15 wt. %, or from about 0.5 wt. % to about 14 wt. %, or from about 0.5 wt. % to about 13 wt. %, or from about 0.5 wt. % to about 12 wt. %, or from about 0.5 wt. % to about 11 wt. %, or from about 0.5 wt. % to about 10 wt. %, or from about 0.5 wt. % to about 9 wt. %, or from about 0.5 wt. % to about 8 wt. %, or from about 0.5 wt. % to about 7 wt. %, or from about 0.5 wt. % to about 6 wt. %, or from about 0.5 wt. % to about 5 wt. %, or from about 0.5 wt. % to about 4 wt. %, or from about 0.5 wt. % to about 3 wt. %, or from about 0.5 wt. % to about 2 wt. %, or from about 0.5 wt. % to about 1 wt. %, or from about 1 wt. % to about 30 wt. %, or from about 1 wt. % to about 25 wt. %, or from about 1 wt. % to about 24 wt. %, or from about 1 wt. % to about 23 wt. %, or from about 1 wt. % to about 22 wt. %, or from about 1 wt. % to about 21 wt. %, or from about 1 wt. % to about 20 wt. %, or from about 1 wt. % to about 19 wt. %, or from about 1 wt. % to about 18 wt. %, or from about 1 wt. % to about 17 wt. %, or from about 1 wt. % to about 16 wt. %, or from about 1 wt. % to about 15 wt. %, or from about 1 wt. % to about 14 wt. %, or from about 1 wt. % to about 13 wt. %, or from about 1 wt. % to about 12 wt. %, or from about 1 wt. % to about 11 wt. %, or from about 1 wt. % to about 10 wt. %, or from about 1 wt. % to about 9 wt. %, or from about 1 wt. % to about 8 wt. %, or from about 1 wt. % to about 7 wt. %, or from about 1 wt. % to about 6 wt. %, or from about 1 wt. % to about 5 wt. %, or from about 1 wt. % to about 4 wt. %, or from about 2 wt. % to about 30 wt. %, or from about 2 wt. % to about 25 wt. %, or from about 2 wt. % to about 24 wt. %, or from about 2 wt. % to about 23 wt. %, or from about 2 wt. % to about 22 wt. %, or from about 2 wt. % to about 21 wt. %, or from about 2 wt. % to about 20 wt. %, or from about 2 wt. % to about 19 wt. %, or from about 2 wt. % to about 18 wt. %, or from about 2 wt. % to about 17 wt. %, or from about 2 wt. % to about 16 wt. %, or from about 2 wt. % to about 15 wt. %, or from about 2 wt. % to about 14 wt. %, or from about 2 wt. % to about 13 wt. %, or from about 2 wt. % to about 12 wt. %, or from about 2 wt. % to about 11 wt. %, or from about 2 wt. % to about 10 wt. %, or from about 2 wt. % to about 9 wt. %, or from about 2 wt. % to about 8 wt. %, or from about 2 wt. % to about 7 wt. %, or from about 2 wt. % to about 6 wt. %, or from about 2 wt. % to about 5 wt. %, or from about 2 wt. % to about 4 wt. %, or from about 3 wt. % to about 30 wt. %, or from about 3 wt. % to about 25 wt. %, or from about 3 wt. % to about 24 wt. %, or from about 3 wt. % to about 23 wt. %, or from about 3 wt. % to about 22 wt. %, or from about 3 wt. % to about 21 wt. %, or from about 3 wt. % to about 20 wt. %, or from about 3 wt. % to about 19 wt. %, or from about 3 wt. % to about 18 wt. %, or from about 3 wt. % to about 17 wt. %, or from about 3 wt. % to about 16 wt. %, or from about 3 wt. % to about 15 wt. %, or from about 3 wt. % to about 14 wt. %, or from about 3 wt. % to about 13 wt. %, or from about 3 wt. % to about 12 wt. %, or from about 3 wt. % to about 11 wt. %, or from about 3 wt. % to about 10 wt. %, or from about 3 wt. % to about 9 wt. %, or from about 3 wt. % to about 8 wt. %, or from about 3 wt. % to about 7 wt. %, or from about 3 wt. % to about 6 wt. %, or from about 3 wt. % to about 5 wt. %, or from about 3 wt. % to about 4 wt. %, or from about 4 wt. % to about 30 wt. %, or from about 4 wt. % to about 25 wt. %, or from about 4 wt. % to about 24 wt. %, or from about 4 wt. % to about 23 wt. %, or from about 4 wt. % to about 22 wt. %, or from about 4 wt. % to about 21 wt. %, or from about 4 wt. % to about 20 wt. %, or from about 4 wt. % to about 19 wt. %, or from about 4 wt. % to about 18 wt. %, or from about 4 wt. % to about 17 wt. %, or from about 4 wt. % to about 16 wt. %, or from about 4 wt. % to about 15 wt. %, or from about 4 wt. % to about 14 wt. %, or from about 4 wt. % to about 13 wt. %, or from about 4 wt. % to about 12 wt. %, or from about 4 wt. % to about 11 wt. %, or from about 4 wt. % to about 10 wt. %, or from about 4 wt. % to about 9 wt. %, or from about 4 wt. % to about 8 wt. %, or from about 4 wt. % to about 7 wt. %, or from about 4 wt. % to about 6 wt. %, or from about 4 wt. % to about 5 wt. %, or from about 5 wt. % to about 30 wt. %, or from about 5 wt. % to about 25 wt. %, or from about 5 wt. % to about 24 wt. %, or from about 5 wt. % to about 23 wt. %, or from about 5 wt. % to about 22 wt. %, or from about 5 wt. % to about 21 wt. %, or from about 5 wt. % to about 20 wt. %, or from about 5 wt. % to about 19 wt. %, or from about 5 wt. % to about 18 wt. %, or from about 5 wt. % to about 17 wt. %, or from about 5 wt. % to about 16 wt. %, or from about 5 wt. % to about 15 wt. %, or from about 5 wt. % to about 14 wt. %, or from about 5 wt. % to about 13 wt. %, or from about 5 wt. % to about 12 wt. %, or from about 5 wt. % to about 11 wt. %, or from about 5 wt. % to about 10 wt. %, or from about 5 wt. % to about 9 wt. %, or from about 5 wt. % to about 8 wt. %, or from about 5 wt. % to about 7 wt. %, or from about 5 wt. % to about 6 wt. %, or from about 6 wt. % to about 30 wt. %, or from about 6 wt. % to about 25 wt. %, or from about 6 wt. % to about 24 wt. %, or from about 6 wt. % to about 23 wt. %, or from about 6 wt. % to about 22 wt. %, or from about 6 wt. % to about 21 wt. %, or from about 6 wt. % to about 20 wt. %, or from about 6 wt. % to about 19 wt. %, or from about 6 wt. % to about 18 wt. %, or from about 6 wt. % to about 17 wt. %, or from about 6 wt. % to about 16 wt. %, or from about 6 wt. % to about 15 wt. %, or from about 6 wt. % to about 14 wt. %, or from about 6 wt. % to about 13 wt. %, or from about 6 wt. % to about 12 wt. %, or from about 6 wt. % to about 11 wt. %, or from about 6 wt. % to about 10 wt. %, or from about 6 wt. % to about 9 wt. %, or from about 6 wt. % to about 8 wt. %, or from about 6 wt. % to about 7 wt. %, or from about 7 wt. % to about 30 wt. %, or from about 7 wt. % to about 25 wt. %, or from about 7 wt. % to about 24 wt. %, or from about 7 wt. % to about 23 wt. %, or from about 7 wt. % to about 22 wt. %, or from about 7 wt. % to about 21 wt. %, or from about 7 wt. % to about 20 wt. %, or from about 7 wt. % to about 19 wt. %, or from about 7 wt. % to about 18 wt. %, or from about 7 wt. % to about 17 wt. %, or from about 7 wt. % to about 16 wt. %, or from about 7 wt. % to about 15 wt. %, or from about 7 wt. % to about 14 wt. %, or from about 7 wt. % to about 13 wt. %, or from about 7 wt. % to about 12 wt. %, or from about 7 wt. % to about 11 wt. %, or from about 7 wt. % to about 10 wt. %, or from about 7 wt. % to about 9 wt. %, or from about 7 wt. % to about 8 wt. %, or from about 8 wt. % to about 30 wt. %, or from about 8 wt. % to about 25 wt. %, or from about 8 wt. % to about 24 wt. %, or from about 8 wt. % to about 23 wt. %, or from about 8 wt. % to about 22 wt. %, or from about 8 wt. % to about 21 wt. %, or from about 8 wt. % to about 20 wt. %, or from about 8 wt. % to about 19 wt. %, or from about 8 wt. % to about 18 wt. %, or from about 8 wt. % to about 17 wt. %, or from about 8 wt. % to about 16 wt. %, or from about 8 wt. % to about 15 wt. %, or from about 8 wt. % to about 14 wt. %, or from about 8 wt. % to about 13 wt. %, or from about 8 wt. % to about 12 wt. %, or from about 8 wt. % to about 11 wt. %, or from about 8 wt. % to about 10 wt. %, or from about 8 wt. % to about 9 wt. %, or from about 9 wt. % to about 30 wt. %, or from about 9 wt. % to about 25 wt. %, or from about 9 wt. % to about 24 wt. %, or from about 9 wt. % to about 23 wt. %, or from about 9 wt. % to about 22 wt. %, or from about 9 wt. % to about 21 wt. %, or from about 9 wt. % to about 20 wt. %, or from about 9 wt. % to about 19 wt. %, or from about 9 wt. % to about 18 wt. %, or from about 9 wt. % to about 17 wt. %, or from about 9 wt. % to about 16 wt. %, or from about 9 wt. % to about 15 wt. %, or from about 9 wt. % to about 14 wt. %, or from about 9 wt. % to about 13 wt. %, or from about 9 wt. % to about 12 wt. %, or from about 9 wt. % to about 11 wt. %, or from about 9 wt. % to about 10 wt. %, or from about 10 wt. % to about 30 wt. %, or from about 10 wt. % to about 25 wt. %, or from about 10 wt. % to about 24 wt. %, or from about 10 wt. % to about 23 wt. %, or from about 10 wt. % to about 22 wt. %, or from about 10 wt. % to about 21 wt. %, or from about 10 wt. % to about 20 wt. %, or from about 10 wt. % to about 19 wt. %, or from about 10 wt. % to about 18 wt. %, or from about 10 wt. % to about 17 wt. %, or from about 10 wt. % to about 16 wt. %, or from about 10 wt. % to about 15 wt. %, or from about 10 wt. % to about 14 wt. %, or from about 10 wt. % to about 13 wt. %, or from about 10 wt. % to about 12 wt. %, or from about 10 wt. % to about 11 wt. %, or from about 11 wt. % to about 30 wt. %, or from about 11 wt. % to about 25 wt. %, or from about 11 wt. % to about 24 wt. %, or from about 11 wt. % to about 23 wt. %, or from about 11 wt. % to about 22 wt. %, or from about 11 wt. % to about 21 wt. %, or from about 11 wt. % to about 20 wt. %, or from about 11 wt. % to about 19 wt. %, or from about 11 wt. % to about 18 wt. %, or from about 11 wt. % to about 17 wt. %, or from about 11 wt. % to about 16 wt. %, or from about 11 wt. % to about 15 wt. %, or from about 11 wt. % to about 14 wt. %, or from about 11 wt. % to about 13 wt. %, or from about 11 wt. % to about 12 wt. %, or from about 12 wt. % to about 30 wt. %, or from about 12 wt. % to about 25 wt. %, or from about 12 wt. % to about 24 wt. %, or from about 12 wt. % to about 23 wt. %, or from about 12 wt. % to about 22 wt. %, or from about 12 wt. % to about 21 wt. %, or from about 12 wt. % to about 20 wt. %, or from about 12 wt. % to about 19 wt. %, or from about 12 wt. % to about 18 wt. %, or from about 12 wt. % to about 17 wt. %, or from about 12 wt. % to about 16 wt. %, or from about 12 wt. % to about 15 wt. %, or from about 12 wt. % to about 14 wt. %, or from about 12 wt. % to about 13 wt. %, or from about 13 wt. % to about 30 wt. %, or from about 13 wt. % to about 25 wt. %, or from about 13 wt. % to about 24 wt. %, or from about 13 wt. % to about 23 wt. %, or from about 13 wt. % to about 22 wt. %, or from about 13 wt. % to about 21 wt. %, or from about 13 wt. % to about 20 wt. %, or from about 13 wt. % to about 19 wt. %, or from about 13 wt. % to about 18 wt. %, or from about 13 wt. % to about 17 wt. %, or from about 13 wt. % to about 16 wt. %, or from about 13 wt. % to about 15 wt. %, or from about 13 wt. % to about 14 wt. %, or from about 14 wt. % to about 30 wt. %, or from about 14 wt. % to about 25 wt. %, or from about 14 wt. % to about 24 wt. %, or from about 14 wt. % to about 23 wt. %, or from about 14 wt. % to about 22 wt. %, or from about 14 wt. % to about 21 wt. %, or from about 14 wt. % to about 20 wt. %, or from about 14 wt. % to about 19 wt. %, or from about 14 wt. % to about 18 wt. %, or from about 14 wt. % to about 17 wt. %, or from about 14 wt. % to about 16 wt. %, or from about 14 wt. % to about 15 wt. %, or from about 15 wt. % to about 30 wt. %, or from about 15 wt. % to about 25 wt. %, or from about 15 wt. % to about 24 wt. %, or from about 15 wt. % to about 23 wt. %, or from about 15 wt. % to about 22 wt. %, or from about 15 wt. % to about 21 wt. %, or from about 15 wt. % to about 20 wt. %, or from about 15 wt. % to about 19 wt. %, or from about 15 wt. % to about 18 wt. %, or from about 15 wt. % to about 17 wt. %, or from about 15 wt. % to about 16 wt. %, or from about 16 wt. % to about 30 wt. %, or from about 16 wt. % to about 25 wt. %, or from about 16 wt. % to about 24 wt. %, or from about 16 wt. % to about 23 wt. %, or from about 16 wt. % to about 22 wt. %, or from about 16 wt. % to about 21 wt. %, or from about 16 wt. % to about 20 wt. %, or from about 16 wt. % to about 19 wt. %, or from about 16 wt. % to about 18 wt. %, or from about 16 wt. % to about 17 wt. %, or from about 17 wt. % to about 30 wt. %, or from about 17 wt. % to about 25 wt. %, or from about 17 wt. % to about 24 wt. %, or from about 17 wt. % to about 23 wt. %, or from about 17 wt. % to about 22 wt. %, or from about 17 wt. % to about 21 wt. %, or from about 17 wt. % to about 20 wt. %, or from about 17 wt. % to about 19 wt. %, or from about 17 wt. % to about 18 wt. %,

or from about 18 wt. % to about 30 wt. %, or from about 18 wt. % to about 25 wt. %, or from about 18 wt. % to about 24 wt. %, or from about 18 wt. % to about 23 wt. %, or from about 18 wt. % to about 22 wt. %, or from about 18 wt. % to about 21 wt. %, or from about 18 wt. % to about 20 wt. %, or from about 18 wt. % to about 19 wt. %, or from about 19 wt. % to about 30 wt. %, or from about 19 wt. % to about 25 wt. %, or from about 19 wt. % to about 24 wt. %, or from about 19 wt. % to about 23 wt. %, or from about 19 wt. % to about 22 wt. %, or from about 19 wt. % to about 21 wt. %, or from about 19 wt. % to about 20 wt. %, or from about 20 wt. % to about 30 wt. %, or from about 20 wt. % to about 25 wt. %, or from about 20 wt. % to about 24 wt. %, or from about 20 wt. % to about 23 wt. %, or from about 20 wt. % to about 22 wt. %, or from about 20 wt. % to about 21 wt. %, of the talc particulate (based on the total weight of the polymer composition).

The polymer composition may comprise filler other than the inventive talc particulate including, but not limited to, an alkaline earth metal carbonate or sulphate, such as calcium carbonate, magnesium carbonate, dolomite, gypsum, a hydrous clay such as hydrous kaolin, halloysite or ball clay, an anhydrous (calcined) kaolin such as metakaolin or fully calcined kaolin, mica, perlite, feldspars, nepheline syenite, wollastonite, diatomaceous earth, barite, glass, and natural or synthetic silica or silicates.

In certain embodiments, the polymer composition may comprise a talc other than the talc particulate of the present invention. In certain embodiments, the polymer composition does not comprise talc other than the talc particulate of the present invention.

The filler compounds other than the talc particulate may be included during preparation of the polymer composition, or alternatively, during preparation of the talc particulate, e.g., the talc particulate may be mixed and blended with the other filler compound(s), and optionally combined with surface treatment agent.

In certain embodiments, the amount of other filler compound(s) is present in an amount less than about 10 % by weight, based on the total weight of the polymer composition, for example, less than about 5 % by weight, or less than about 1 % by weight, or less than about 0.5 % by weight, or less than about 0.4 % by weight, or less than about 0.3 % by weight, or less than about 0.2 % by weight, or less than about 0.1 % by weight.

The polymer composition comprises a bioplastic polymer. It will be appreciated that a bioplastic polymer is a polymer produced from a biomass source (i.e. plant or animal material) such as vegetable fat and/or oil, corn starch, straw, woodchips, sawdust, food waste, and the like. A bioplastic polymer may be obtained by processing one or more naturally-occurring biopolymers (i.e. polymers produced within biological organisms). Alternatively, a bioplastic polymer may be synthesised from one or more precursors obtained or derived from biomass sources. Bioplastic polymers may be distinguished from petrochemical-based (also known as "petrobased") or fossil-fuel plastic polymers which are derived from petroleum or natural gas. Bioplastic polymers may also be known as biobased polymers.

The bioplastic polymer may be selected from: a polysaccharide-based bioplastic polymer such as a starch-based bioplastic polymer or a cellulose-based bioplastic polymer; a protein-based bioplastic polymer such as a gluten-based bioplastic polymer, a casein-based bioplastic polymer or a soy protein-based bioplastic polymer; an aliphatic polyester bioplastic polymer such as polylactic acid (PLA), a polybutylsuccinate (PBS) or a polyhydroxyalkanoate (PHA), for example, poly-3-hydroxybutyrate (PHB), polyhydroxyvalerate (PHV) or polyhydroxyhexanoate (PHH); a polyamide bioplastic polymer such as polyamide 11 (PA 11, i.e. a bioplastic polyamide member of the nylon family produced by polymerization of 11-aminoundecanoic acid typically derived from castor beans); bioplastic polyethylene (i.e. polyethylene produced from a biomass source, typically from ethanol produced by fermentation of agricultural feedstocks such as sugar cane or corn); a bioplastic polyhydroxyurethane; a lipid-derived bioplastic polymer such as a lipid-derived polyurethane, polyester or epoxy resin.

The bioplastic polymer may be polylactic acid (PLA), also known as poly(lactic acid) or polylactide. Polylactic acid is a bioplastic thermoplastic polyester having backbone formula $(C_3H_4O_2)_n$ or $[-C(CH_3)HC(=O)O-]_n$, typically produced by condensation of lactic acid or by ring-opening polymerization of lactide. The monomers, lactic acid and lactide, may be obtained by fermentation of plant starch from sources such as corn, cassava, tapioca, sugarcane or sugar beet pulp.

Lactic acid and lactide are chiral and are available in L- and D-enantiomers. An optically inactive meso lactide enantiomer can also be formed from L-lactic acid and D-lactic acid. Polylactic acid is therefore available as poly-L-lactide (PLLA), resulting from the polymerization of L-lactic acid or L-lactide, poly-D-lactide (PDLA), resulting from the polymerization of D-lactic acid or D-lactide, and poly-DL-lactide (PDLLA), resulting from the polymerization of a mixture (e.g. a racemic mixture, known as Rac-lactide) of L- and D-lactic acids or L- and D-lactides.

The bioplastic polymer may be polylactic acid, wherein the polylactic acid comprises one or more of: poly-L-lactide (PLLA); poly-D-lactide (PDLA); poly-DL-lactide (PDLLA).

The bioplastic polymer may be selected from: poly-L-lactide (PLLA); poly-D-lactide (PDLA); poly-DL-lactide (PDLLA).

The bioplastic polymer may be polylactic acid, wherein the polylactic acid comprises no less than about 50 wt. % poly-L-lactide (PLLA), for example, no less than about 60 wt. % poly-L-lactide (PLLA), or no less than about 70 wt. % poly-L-lactide (PLLA), or no less than about 80 wt. % poly-L-lactide (PLLA), or no less than about 90 wt. % poly-L-lactide (PLLA), or no less than about 95 wt. % poly-L-lactide (PLLA), or no less than about 99 wt. % poly-L-lactide (PLLA). The bioplastic polymer may be polylactic acid, wherein the polylactic acid has a stereochemical purity of no less than about 50 % L-isomer, for example, no less than about 60 % L-isomer, or no less than about 70 % L-isomer, or no less than about 80 % L-isomer, or no less than about 90 % L-isomer, or no less than about 95 % L-isomer, or no less than about 99 %, L-isomer. It may be that the bioplastic polymer is polylactic acid and that no less than about 50 %, for example, no less than about 60 %, or no less than about 70 %, or no less than about 80 %, or no less than about 90 %, or no less than about 95 %, or no less than about 99 %, of the monomer units of the polylactic acid have L stereochemistry (i.e. derive from L enantiomers). The bioplastic polymer may be poly-L-lactide (PLLA).

The bioplastic polymer may be polylactic acid, wherein the polylactic acid comprises no less than about 50 wt. % poly-D-lactide (PDLA), for example, no less than about 60 wt. % poly-D-lactide (PDLA), or no less than about 70 wt. % poly-D-lactide (PDLA), or no less than about 80 wt. % poly-D-lactide (PDLA), or no less than about 90 wt. % poly-D-lactide (PDLA), or no less than about 95 wt. % poly-D-lactide (PDLA), or no less than about 99 wt. % poly-D-lactide (PDLA). The bioplastic polymer may be polylactic acid, wherein the polylactic acid has a stereochemical purity of no less than about 50 % D-isomer, for example, no less than about 60 % D-isomer, or no less than about 70 % D-isomer, or no less than about 80 % D-isomer, or no less than about 90 % D-isomer, or no less than about 95 % D-isomer, or no less than about 99 %, D-isomer. It may be that the bioplastic polymer is polylactic acid and that no less than about 50 %, for example, no less than about 60 %, or no less than about 70 %, or no less than about 80 %, or no less than about 90 %, or no less than about 95 %, or no less than about 99 %, of the monomer units of the polylactic acid have D stereochemistry (i.e. derive from D enantiomers). The bioplastic polymer may be poly-D-lactide (PDLA).

The bioplastic polymer may be polylactic acid, wherein the polylactic acid comprises (e.g. consists of): from about 40 wt. % to about 60 wt. %, for example, about 50 wt. %, poly-D-lactide (PDLA); and from about 40 wt. % to about 60 wt. %, for example, about 50 wt. %, poly-L-lactide (PLLA). The bioplastic polymer may be polylactic acid, wherein the polylactic acid has: a stereochemical purity of from about 40 % to about 60 %, for example, about 50 %, D-isomer; and a stereochemical purity of from about 40 % to about 60 %, for example, about 50 %, L-isomer. It may be that the bioplastic polymer is polylactic acid, that from about 40 % to about 60 %, for example, about 50 %, of the monomer units of the polylactic acid have D stereochemistry (i.e. derive from D enantiomers), and that from about 40 % to about 60 %, for example, about 50 %, of the monomer units of the polylactic acid have L stereochemistry (i.e. derive from L enantiomers). The bioplastic polymer may be poly-DL-lactide (PDLLA).

The polylactic acid may be isotactic polylactic acid, for example, isotactic poly-L-lactide or isotactic poly-D-lactide.

The polylactic acid may be a polylactic acid homopolymer, for example, poly-L-lactide homopolymer or poly-D-lactide homopolymer.

Suitable polylactic acids include polylactic acids in the Luminy® range (such as Luminy® L130, Luminy® L175, Luminy® LX175, Luminy® D070) available from Total Corbion, Netherlands and polylactic acids in the Ingeo™ range (such as 2003D, 2500HP, 3001D, 3052D, 3100HP, 3251D, 4032D, 4043D, 4044D, 4060D, 6060D, 6100D, 6202D, 6252D, 6400D, 6752D, 8052D, 3D450, 3D700, 3D850, 3D870) available from NatureWorks LLC, USA.

The polymer composition may comprise no less than about 0.1 wt. %, for example, no less than about 1 wt. %, or no less than about 5 wt. %, or no less than about 10 wt. %, or no less than about 20 wt. %, or no less than about 30 wt. %, or no less than about 40 wt. %, or no less than about 50 wt. %, or no less than about 60 wt. %, or no less than about 70 wt. %, or no less than about 80 wt. %, or no less than about 90 wt. %, or no less than about 94 wt. %, or no less than about 95 wt. %, or no less than about 96 wt. %, or no less than about 99 wt. %, of the bioplastic polymer (e.g. the polylactic acid). The polymer composition may comprise no more than about 99.9 wt. %, for example, no more than about 99 wt. %, or no more than about 96 wt. %, or no more than about 95 wt. %, or no more than about 94 wt. %, or no more than about 90 wt. %, or no more than about 80 wt. %, or no more than about 70 wt. %, or no more than about 60 wt. %, or no more than about 50 wt. %, or no more than about 40 wt. %, or no more than about 30 wt. %, or no more than about 20 wt. %, or no more than about 10 wt. %, or no more than about 5 wt. %, of the bioplastic polymer (e.g. the polylactic acid). The polymer composition may comprise from about 0.1 wt. % to about 99.9 wt. %, or from about 0.1 wt. % to about 99 wt. %, or from about 0.1 wt. % to about 96 wt. %, or from about 0.1 wt. % to about 95 wt. %, or from about 0.1 wt. % to about 94 wt. %, or from about 0.1 wt. % to about 90 wt. %, or from about 0.1 wt. % to about 80 wt. %, or from about 0.1 wt. % to about 70 wt. %, or from about 0.1 wt. % to about 60 wt. %, or from about 0.1 wt. % to about 50 wt. %, or from about 0.1 wt. % to about 40 wt. %, or from about 0.1 wt. % to about 30 wt. %, or from about 0.1 wt. % to about 20 wt. %, or from about 0.1 wt. % to about 10 wt. %, or from about 0.1 wt. % to about 5 wt. %, or from about 1 wt. % to about 99.9 wt. %, or from about 1 wt. % to about 99 wt. %, or from about 1 wt. % to about 96 wt. %, or from about 1 wt. % to about 95 wt. %, or from about 1 wt. % to about 94 wt. %, or from about 1 wt. % to about 90 wt. %, or from about 1 wt. % to about 80 wt. %, or from about 1 wt. % to about 70 wt. %, or from about 1 wt. % to about 60 wt. %, or from about 1 wt. % to about 50 wt. %, or from about 1 wt. % to about 40 wt. %, or from about 1 wt. % to about 30 wt. %, or from about 1 wt. % to about 20 wt. %, or from about 1 wt. % to about 10 wt. %, or from about 1 wt. % to about 5 wt. %, or from about 5 wt. % to about 99.9 wt. %, or from about 5 wt. % to about 99 wt. %, or from about 5 wt. % to about 96 wt. %, or from about 5 wt. % to about 95 wt. %, or from about 5 wt. % to about 94 wt. %, or from about 5 wt. % to about 90 wt. %, or from about 5 wt. % to about 80 wt. %, or from about 5 wt. % to about 70 wt. %, or from about 5 wt. % to about 60 wt. %, or from about 5 wt. % to about 50 wt. %, or from about 5 wt. % to about 40 wt. %, or from about 5 wt. % to about 30 wt. %, or from about 5 wt. % to about 20 wt. %, or from about 5 wt. % to about 10 wt. %, or from about 10 wt. % to about 99.9 wt. %, or from about 10 wt. % to about 99 wt. %, or from about 10 wt. % to about 96 wt. %, or from about 10 wt. % to about 95 wt. %, or from about 10 wt. % to about 94 wt. %, or from about 10 wt. % to about 90 wt. %, or from about 10 wt. % to about 80 wt. %, or from about 10 wt. % to about 70 wt. %, or from about 10 wt. % to about 60 wt. %, or from about 10 wt. % to about 50 wt. %, or from about 10 wt. % to about 40 wt. %, or from about 10 wt. % to about 30 wt. %, or from about 10 wt. % to about 20 wt. %, or from about 20 wt. % to about 99.9 wt. %, or from about 20 wt. % to about 99 wt. %, or from about 20 wt. % to about 96 wt. %, or from about 20 wt. % to about 95 wt. %, or from about 20 wt. % to about 94 wt. %, or from about 20 wt. % to about 90 wt. %, or from about 20 wt. % to about 80 wt. %, or from about 20 wt. % to about 70 wt. %, or from about 20 wt. % to about 60 wt. %, or from about 20 wt. % to about 50 wt. %, or from about 20 wt. % to about 40 wt. %, or from about 20 wt. % to about 30 wt. %, or from about 30 wt. % to about 99.9 wt. %, or from about 30 wt. % to about 99 wt. %, or from about 30 wt. % to about 96 wt. %, or from about 30 wt. % to about 95 wt. %, or from about 30 wt. % to about 94 wt. %, or from about 30 wt. % to about 90 wt. %, or from about 30 wt. % to about 80 wt. %, or from about 30 wt. % to about 70 wt. %, or from about 30 wt. % to about 60 wt. %, or from about 30 wt. % to about 50 wt. %, or from about 30 wt. % to about 40 wt. %, or from about 40 wt. % to about 99.9 wt. %, or from about 40 wt. % to about 99 wt. %, or from about 40 wt. % to about 96 wt. %, or from about 40 wt. % to about 95 wt. %, or from about 40 wt. % to about 94 wt. %, or from about 40 wt. % to about 90 wt. %, or from about 40 wt. % to about 80 wt. %, or from about 40 wt. % to about 70 wt. %, or from about 40 wt. % to about 60 wt. %, or from about 40 wt. % to about 50 wt. %, or from about 50 wt. % to about 99.9 wt. %, or from about 50 wt. % to about 99 wt. %, or from about 50 wt. % to about 96 wt. %, or from about 50 wt. % to about 95 wt. %, or from about 50 wt. % to about 94 wt. %, or from about 50 wt. % to about 90 wt. %, or from about 50 wt. % to about 80 wt. %, or from about 50 wt. % to about 70 wt. %, or from about 50 wt. % to about 60 wt. %, or from about 60 wt. % to about 99.9 wt. %, or from about 60 wt. % to about 99 wt. %, or from about 60 wt. % to about 96 wt. %, or from about 60 wt. % to about 95 wt. %, or from about 60 wt. % to about 94 wt. %, or from about 60 wt. % to about 90 wt. %, or from about 60 wt. % to about 80 wt. %, or from about 60 wt. % to about 70 wt. %, or from about 70 wt. % to about 99.9 wt. %, or from about 70 wt. % to about 99 wt. %, or from about 70 wt. % to about 96 wt. %, or from about 70 wt. % to about 95 wt. %, or from about 70 wt. % to about 94 wt. %, or from about 70 wt. % to about 90 wt. %, or from about 70 wt. % to about 80 wt. %, or from about 80 wt. % to about 99.9 wt. %, or from about 80 wt. % to about 99 wt. %, or from about 80 wt. % to about 96 wt. %, or from about 80 wt. % to about 95 wt. %, or from about 80 wt. % to about 94 wt. %, or from about 80 wt. % to about 90 wt. %, or from about 90 wt. % to about 99.9 wt. %, or from about 90 wt. % to about 99 wt. %, or from about 90 wt. % to about 96 wt. %, or from about 90 wt. % to about 95 wt. %, or from about 90 wt. % to about 94 wt. %, or from about 94 wt. % to about 99.9 wt. %, or from about 94 wt. % to about 99 wt. %, or from about 94 wt. % to about 96 wt. %, or from about 94 wt. % to about 95 wt. %, or from about 95 wt. % to about 99.9 wt. %, or from about 95 wt. % to about 99 wt. %, or from about 95 wt. % to about 96 wt. %, or from about 96 wt. % to about 99.9 wt. %, or from about 96 wt. % to about 99 wt. %, or from about 99 wt. % to about 99.9 wt. %, of the bioplastic polymer (e.g. the polylactic acid).

The polymer composition may comprise two or more (i.e. different) polymers.

The polymer composition may comprise two or more (i.e. different) bioplastic polymers. For example, the polymer composition may comprise any particular bioplastic polymer described hereinabove (e.g. polylactic acid) and one or more other (i.e. different) bioplastic polymers, for example, selected from: a polysaccharide-based bioplastic polymer such as a starch-based bioplastic polymer or a cellulose-based bioplastic polymer; a protein-based bioplastic polymer such as a gluten-based bioplastic polymer, a casein-based bioplastic polymer or a soy protein-based bioplastic polymer; an aliphatic polyester bioplastic polymer such as a polybutylsuccinate (PBS) or a polyhydroxyalkanoate (PHA), for example, poly-3-hydroxybutyrate (PHB), polyhydroxyvalerate (PHV) or polyhydroxyhexanoate (PHH); a polyamide bioplastic polymer such as polyamide 11 (PA 11, i.e. a bioplastic polyamide member of the nylon family produced by polymerization of 11-aminoundecanoic acid typically derived from castor beans); bioplastic polyethylene (i.e. polyethylene produced from a biomass source, typically from ethanol produced by fermentation of agricultural feedstocks such as sugar cane or corn); a bioplastic polyhydroyurethane; a lipid-derived bioplastic polymer such as a lipid-derived polyurethane, polyester or epoxy resin.

The polymer composition may comprise no less than about 0.1 wt. %, for example, no less than about 1 wt. %, or no less than about 5 wt. %, or no less than about 10 wt. %, or no less than about 20 wt. %, or no less than about 30 wt. %, or no less than about 40 wt. %, or no less than about 50 wt. %, or no less than about 60 wt. %, or no less than about 70 wt. %, or no less than about 80 wt. %, or no less than about 90 wt. %, or no less than about 94 wt. %, or no less than about 95 wt. %, or no less than about 96 wt. %, or no less than about 99 wt. %, of bioplastic polymer in total. The polymer composition may comprise no more than about 99.9 wt. %, for example, no more than about 99 wt. %, or no more than about 96 wt. %, or no more than about 95 wt. %, or no more than about 94 wt. %, or no more than about 90 wt. %, or no more than about 80 wt. %, or no more than about 70 wt. %, or no more than about 60 wt. %, or no more than about 50 wt. %, or no more than about 40 wt. %, or no more than about 30 wt. %, or no more than about 20 wt. %, or no more than about 10 wt. %, or no more than about 5 wt. %, of bioplastic polymer in total. The polymer composition may comprise from about 0.1 wt. % to about 99.9 wt. %, or from about 0.1 wt. % to about 99 wt. %, or from about 0.1 wt. % to about 96 wt. %, or from about 0.1 wt. % to about 95 wt. %, or from about 0.1 wt. % to about 94 wt. %, or from about 0.1 wt. % to about 90 wt. %, or from about 0.1 wt. % to about 80 wt. %, or from about 0.1 wt. % to about 70 wt. %, or from about 0.1 wt. % to about 60 wt. %, or from about 0.1 wt. % to about 50 wt. %, or from about 0.1 wt. % to about 40 wt. %, or from about 0.1 wt. % to about 30 wt. %, or from about 0.1 wt. % to about 20 wt. %, or from about 0.1 wt. % to about 10 wt. %, or from about 0.1 wt. % to about 5 wt. %, or from about 1 wt. % to about 99.9 wt. %, or from about 1 wt. % to about 99 wt. %, or from about 1 wt. % to about 96 wt. %, or from about 1 wt. % to about 95 wt. %, or from about 1 wt. % to about 94 wt. %, or from about 1 wt. % to about 90 wt. %, or from about 1 wt. % to about 80 wt. %, or from about 1 wt. % to about 70 wt. %, or from about 1 wt. % to about 60 wt. %, or from about 1 wt. % to about 50 wt. %, or from about 1 wt. % to about 40 wt. %, or from about 1 wt. % to about 30 wt. %, or from about 1 wt. % to about 20 wt. %, or from about 1 wt. % to about 10 wt. %, or from about 1 wt. % to about 5 wt. %, or from about 5 wt. % to about 99.9 wt. %, or from about 5 wt. % to about 99 wt. %, or from about 5 wt. % to about 96 wt. %, or from about 5 wt. % to about 95 wt. %, or from about 5 wt. % to about 94 wt. %, or from about 5 wt. % to about 90 wt. %, or from about 5 wt. % to about 80 wt. %, or from about 5 wt. % to about 70 wt. %, or from about 5 wt. % to about 60 wt. %, or from about 5 wt. % to about 50 wt. %, or from about 5 wt. % to about 40 wt. %, or from about 5 wt. % to about 30 wt. %, or from about 5 wt. % to about 20 wt. %, or from about 5 wt. % to about 10 wt. %, or from about 10 wt. % to about 99.9 wt. %, or from about 10 wt. % to about 99 wt. %, or from about 10 wt. % to about 96 wt. %, or from about 10 wt. % to about 95 wt. %, or from about 10 wt. % to about 94 wt. %, or from about 10 wt. % to about 90 wt. %, or from about 10 wt. % to about 80 wt. %, or from about 10 wt. % to about 70 wt. %, or from about 10 wt. % to about 60 wt. %, or from about 10 wt. % to about 50 wt. %, or from about 10 wt. % to about 40 wt. %, or from about 10 wt. % to about 30 wt. %, or from about 10 wt. % to about 20 wt. %, or from about 20 wt. % to about 99.9 wt. %, or from about 20 wt. % to about 99 wt. %, or from about 20 wt. % to about 96 wt. %, or from about 20 wt. % to about 95 wt. %, or from about 20 wt. % to about 94 wt. %, or from about 20 wt. % to about 90 wt. %, or from about 20 wt. % to about 80 wt. %, or from about 20 wt. % to about 70 wt. %, or from about 20 wt. % to about 60 wt. %, or from about 20 wt. % to about 50 wt. %, or from about 20 wt. % to about 40 wt. %, or from about 20 wt. % to about 30 wt. %, or from about 30 wt. % to about 99.9 wt. %, or from about 30 wt. % to about 99 wt. %, or from about 30 wt. % to about 96 wt. %, or from about 30 wt. % to about 95 wt. %, or from about 30 wt. % to about 94 wt. %, or from about 30 wt. % to about 90 wt. %, or from about 30 wt. % to about 80 wt. %, or from about 30 wt. % to about 70 wt. %, or from about 30 wt. % to about 60 wt. %, or from about 30 wt. % to about 50 wt. %, or from about 30 wt. % to about 40 wt. %, or from about 40 wt. % to about 99.9 wt. %, or from about 40 wt. % to about 99 wt. %, or from about 40 wt. % to about 96 wt. %, or from about 40 wt. % to about 95 wt. %, or from about 40 wt. % to about 94 wt. %, or from about 40 wt. % to about 90 wt. %, or from about 40 wt. % to about 80 wt. %, or from about 40 wt. % to about 70 wt. %, or from about 40 wt. % to about 60 wt. %, or from about 40 wt. % to about 50 wt. %, or from about 50 wt. % to about 99.9 wt. %, or from about 50 wt. % to about 99 wt. %, or from about 50 wt. % to about 96 wt. %, or from about 50 wt. % to about 95 wt. %, or from about 50 wt. % to about 94 wt. %, or from about 50 wt. % to about 90 wt. %, or from about 50 wt. % to about 80 wt. %, or from about 50 wt. % to about 70 wt. %, or from about 50 wt. % to about 60 wt. %, or from about 60 wt. % to about 99.9 wt. %, or from about 60 wt. % to about 99 wt. %, or from about 60 wt. % to about 96 wt. %, or from about 60 wt. % to about 95 wt. %, or from about 60 wt. % to about 94 wt. %, or from about 60 wt. % to about 90 wt. %, or from about 60 wt. % to about 80 wt. %, or from about 60 wt. % to about 70 wt. %, or from about 70 wt. % to about 99.9 wt. %, or from about 70 wt. % to about 99 wt. %, or from about 70 wt. % to about 96 wt. %, or from about 70 wt. % to about 95 wt. %, or from about 70 wt. % to about 94 wt. %, or from about 70 wt. % to about 90 wt. %, or from about 70 wt. % to about 80 wt. %, or from about 80 wt. % to about 99.9 wt. %, or from about 80 wt. % to about 99 wt. %, or from about 80 wt. % to about 96 wt. %, or from about 80 wt. % to about 95 wt. %, or from about 80 wt. % to about 94 wt. %, or from about 80 wt. % to about 90 wt. %, or from about 90 wt. % to about 99.9 wt. %, or from about 90 wt. % to about 99 wt. %, or from about 90 wt. % to about 96 wt. %, or from about 90 wt. % to about 95 wt. %, or from about 90 wt. % to about 94 wt. %, or from about 94 wt. % to about 99.9 wt. %, or from about 94 wt. % to about 99 wt. %, or from about 94 wt. % to about 96 wt. %, or from about 94 wt. % to about 95 wt. %, or from about 95 wt. % to about 99.9 wt. %, or from about 95 wt. % to about 99 wt. %, or from about 95 wt. % to about 96 wt. %, or from about 96 wt. % to about 99.9 wt. %, or from about 96 wt. % to about 99 wt. %, or from about 99 wt. % to about 99.9 wt. %, of bioplastic polymer in total.

The polymer composition may comprise any particular bioplastic polymer described hereinabove (e.g. polylactic acid) and one or more fossil-fuel plastic polymers.

The polymer composition may comprise any particular bioplastic polymer described hereinabove (e.g. polylactic acid) and any other (i.e. different) natural or synthetic polymer or mixture thereof.

The polymer composition may, for example, be thermoplastic or thermoset. The polymer composition may comprise thermoplastic or thermosetting polymers. The bioplastic polymer(s) may be thermoplastic or thermosetting.

It will be appreciated that the term "polymer" used herein includes homopolymers and/or copolymers, as well as crosslinked and/or entangled polymers.

The term "precursor" as may be applied to a polymer component will be readily understood by one of ordinary skill in the art. For example, suitable precursors may include one or more of: monomers, cross-linking agents, curing systems comprising cross-linking agents and promoters, or any combination thereof. Where the talc particulate is mixed with precursors of a polymer, the polymer composition will subsequently be formed by curing and/or polymerising the precursor components to form the desired polymer.

Polymers, including homopolymers and/or copolymers, comprised in the polymer composition of the present invention may be prepared from one or more of the following monomers: lactic acid, lactide, acrylic acid, methacrylic acid, methyl methacrylate, and alkyl acrylates having 1-18 carbon atoms in the alkyl group, styrene, substituted styrenes, divinyl benzene, diallyl phthalate, butadiene, vinyl acetate, acrylonitrile, methacrylonitrile, maleic anhydride, esters of maleic acid or fumaric acid, tetrahydrophthalic acid or anhydride, itaconic acid or anhydride, and esters of itaconic acid, with or without a cross-linking dimer, trimer, or tetramer, crotonic acid, neopentyl glycol, propylene glycol, butanediols, ethylene glycol, diethylene glycol, dipropylene glycol, glycerol, cyclohexanedimethanol, 1,6 hexanediol, trimethyolpropane, pentaerythritol, phthalic anhydride, isophthalic acid, terephthalic acid, hexahydrophthalic anyhydride, adipic acid or succinic acids, azelaic acid and dimer fatty acids, toluene diisocyanate and diphenyl methane diisocyanate.

The polymer composition may comprise one or more of polymethylmethacrylate (PMMA), polyacetal, polycarbonate, polyvinyls, polyacrylonitrile, polybutadiene, polystyrene, polyacrylate, polyethylene, polypropylene, epoxy polymers, unsaturated polyesters, polyurethanes, polycyclopentadienes and copolymers thereof. Suitable polymers also include liquid rubbers, such as silicones.

The polymers which may be used in accordance with the invention are advantageously thermoplastic polymers. Thermoplastic polymers are those which soften under the action of heat and harden again to their original characteristics on cooling, that is, the heating-cooling cycle is fully reversible. By conventional definition, thermoplastics are straight and branched linear chain organic polymers with a molecular bond. Examples of polymers which may be used in accordance with the invention (e.g. in addition to the one or more bioplastic polymers) include, but are not limited to polyethylene, for example, linear low density polyethylene (LLDPE) and medium density grades thereof, high density polyethylene (HDPE), low density polyethylene (LDPE), polypropylene (PP), polyethylene terephthalate (PET), vinyl/polyvinyl chloride (PVC), polystyrene, and mixtures thereof.

In certain embodiments, the polymer composition comprises (e.g. in addition to the one or more bioplastic polymers) a polyalkylene polymer, for example, polyethylene, polypropylene, polybutylene, or a copolymer of two or more of ethylene, propylene and butylenes monomers, for example, an ethylene-propylene copolymer. In certain embodiments, the polymer composition comprises (e.g. in addition to the one or more bioplastic polymers) a mixture of two or more of propylene, polyethylene and ethylene-propylene copolymer, for example a mixture of propylene and polyethylene.

In certain embodiments, the polymer composition comprises (e.g. in addition to the one or more bioplastic polymers) polypropylene or polyethylene or a mixture of polypropylene and polyethylene. In certain embodiments, the polymer composition comprises (e.g. in addition to the one or more bioplastic polymers) polypropylene.

The polymer composition may comprise one or more additives other than the talc particulate. For example, the polymer composition may comprise an impact modifier other than the talc particulate, such as core-shell impact modifier. The impact modifier (e.g. core-shell impact modifier) may be a polymer-based impact modifier such as a polyacrylate-based impact modifier (e.g. a methacrylate-butadiene-styrene-type impact modifier such as Biostrength® 150 or Biostrength® 280 available from Arkema S.A., France). Other examples of suitable impact modifiers include PARALOID™ BPM-520 (available from Dow Inc., USA), Terratek® Flex (available from Green Dot Bioplastics, Inc., USA), Biomax® Strong 120 (available from DuPont Inc., USA), Ecoflex® (available from BASF SE, Germany) and Sukano® impact modifiers (available from Sukano AG, Switzerland).

The polymer composition may comprise no more than about 10 wt. %, for example, no more than about 6 wt. %, or no more than about 5 wt. %, or no more than about 4 wt. %, or no more than about 3 wt. %, or no more than about 2 wt. %, of additives other than the talc particulate (e.g. impact modifiers other than the talc particulate). The polymer composition may comprise no more than about 10 wt. %, for example, no more than about 6 wt. %, or no more than about 5 wt. %, or no more than about 4 wt. %, or no more than about 3 wt. %, or no more than about 2 wt. %, of a polymer-based impact modifier such as a polyacrylate-based impact modifier (e.g. a methacrylate-butadiene-styrene-type impact modifier such as Biostrength® 150 available from Arkema S.A., France).

Other possible additives which may be present in the polymer composition include plasticizers, nucleating agents and/or stabilizers. Suitable plasticizers include citric acid esters, triacetine or tributyl citrate, oligomeric malonate ester amides, 4,4-methylene diphenyl diisocyanate, polyglycerol esters, polyethylene glycol and acetyl triethyl citrate, poly(1,3-butylene adipate), adipate, adipic acid, GE-glycerol ester and adipic acid ester. Suitable nucleating agents include LAK-301 (available from Takemoto Oil & Fat Co., Ltd., Japan), Plastomoll DOA (available from BASF SE, Germany), phenylphosphonic acid, zinc salt, PEG Pluriol E8005 (available from Dow Inc., USA), dimethylbenzylidene sorbitol, magnesium oxysulfate, HPR-803i (available from Milliken & Company, USA), and ethylene-bis-stearamide.

Suitable stabilizers include epoxide oligomers (e.g. the Joncryl® range, such as 4368 (available from BASF SE, Germany)), citric acid ester, Chimassorb® 944 (available from BASF SE, Germany), linseed oil derivative, soybean oil, maleic anhydride, PARALOID™ BPMS-260 (available from Dow Inc., USA), glycidyl methacrylate, Stabaxol® 1 LF (available from LANXESS Deutschland GmbH, Germany), Tinuvin® (available from BASF SE, Germany), carbodiimide, and Stabaxol® P 110 (available from LANXESS Deutschland GmbH, Germany).

The polymer composition may further comprise one or more non-mineral fillers, such as natural fibres (e.g. wood fibres), carbon fibres and/or glass fibres.

The presence of the talc particulate in the polymer composition may, for example, increase the impact strength, the tensile modulus and/or the heat deflection of the polymer composition.

The precise impact strength, tensile modulus and/or heat deflection of the polymer composition may vary depending on the exact polymer used and any other components in the polymer composition.

The polymer composition may, for example, have an impact strength that is at least about 1.0 % greater than the impact strength of a polymer composition that is identical except that it does not comprise the talc particulate of the present invention but comprises the same amount of a talc different from the talc of the invention. For example, the polymer composition may have an impact strength that is at least about 5.0 % greater or at least about 10.0 % greater or at least about 15.0 % greater than the impact strength of a polymer composition that is identical except that it does not comprise the talc particulate of the present invention but comprises the same amount of a talc different from the talc of the invention.

The polymer composition may, for example, have an impact strength that is up to about 100.0 % greater than the impact strength of a polymer composition that is identical except that it does not comprise the talc particulate of the present invention but comprises the same amount of a talc different from the talc of the invention. For example, the polymer composition may have an impact strength that is up to about 80.0 % or up to about 60.0 % or up to about 50.0 % or up to about 40.0 % or up to about 30.0 % or up to about 20.0 % or up to about 10.0 % greater than the impact strength of a polymer composition that is identical except that it does not comprise the talc particulate of the present invention but comprises the same amount of a talc different from the talc of the invention.

The polymer composition may, for example, have an impact strength that is from about 1.0 % to about 100.0 % or from about 5.0 % to about 100.0 % or from about 10.0 % to about 80.0 % or from about 15.0 % to about 70.0 % greater than the impact strength of a polymer composition that is identical except that it does not comprise the talc particulate of the present invention.

The polymer composition may have a Charpy impact strength no less than about 4.0 kJ/m, for example, no less than about 4.5 kJ/m, or no less than about 5.0 kJ/m, or no less than about 6.0 kJ/m, or no less than about 7.0 kJ/m, or no less than about 8.0 kJ/m. The polymer composition may have a Charpy impact strength no greater than about 15.0 kJ/m, for example, no greater than about 12.0 kJ/m, or no greater than about 10.0 kJ/m, or no greater than about 9.0 kJ/m, or no greater than about 8.0 kJ/m, or no greater than about 7.0 kJ/m, or no greater than about 6.0 kJ/m. The polymer composition may have a Charpy impact strength from about 4.0 kJ/m to about 15.0 kJ/m, for example, from about 4.0 kJ/m to about 12.0 kJ/m, or from about 4.0 kJ/m to about 10.0 kJ/m, or from about 4.0 kJ/m to about 9.0 kJ/m, or from about 4.0 kJ/m to about 8.0 kJ/m, or from about 4.0 kJ/m to about 7.0 kJ/m, or from about 4.0 kJ/m to about 6.0 kJ/m, or from about 6.0 kJ/m to about 15.0 kJ/m, or from about 6.0 kJ/m to about 12.0 kJ/m, or from about 6.0 kJ/m to about 10.0 kJ/m, or from about 6.0 kJ/m to about 9.0 kJ/m, or from about 7.0 kJ/m to about 15.0 kJ/m, or from about 7.0 kJ/m to about 12.0 kJ/m, or from about 7.0 kJ/m to about 10.0 kJ/m, or from about 7.0 kJ/m to about 9.0 kJ/m.

Charpy impact strength (KJ/m) (unnotched edgewise and normal impact) may be measured on 80 mm by 10 mm by 4 mm bars according to ISO 179-1 at +23°C.

The polymer composition may have a tensile modulus no less than about 3500 MPa, for example, no less than about 4000 MPa, or no less than about 4500 MPa, or no less than about 4600 MPa, or no less than about 5000 MPa, or no less than about 5300 MPa, or no less than about 5400 MPa. The polymer composition may have a tensile modulus no greater than about 7000 MPa, for example, no greater than about 6000 MPa, or no greater than about 5500 MPa, or no greater than about 5000 MPa, or no greater than about 4700 MPa. The polymer composition may have a tensile modulus from about 3500 MPa to about 7000 MPa, for example, from about 3500 MPa to about 6000 MPa, or from about 4000 MPa to about 5000 MPa, or from about 4500 MPa to about 5000 MPa, or from about 4500 MPa to about 4700 MPa, or from about 4600 MPa to about 4700 MPa, or from about 4500 MPa to about 6000 MPa, or from about 5000 MPa to about 6000 MPa, or from about 5300 MPa to about 5500 MPa.

The tensile modulus of the polymer composition may be measured according to ISO 527-1 and ISO 527-2.

The polymer composition may have a heat deflection temperature of no less than about 80°C, for example, no less than about 85°C, or no less than about 90°C, or no less than about 95°C, or no less than about 100°C, or no less than about 105°C, or no less than about 110°C. The polymer composition may have a heat deflection temperature of no greater than about 130°C, for example, no greater than about 120°C, or no greater than about 115°C, or no greater than about 110°C, or no greater than about 105°C, or no greater than about 100°C. The polymer composition may have a heat deflection temperature from about 80°C to about 130°C, for example, from about 90°C to about 120°C, or from about 80°C to about 120°C, or from about 80°C to about 110°C, or from about 85°C to about 110°C, or from about 85°C to about 105°C, or from about 90°C to about 105°C, or from about 95°C to about 100°C, or from about 90°C to about 130°C, or from about 95°C to about 130°C, or from about 95°C to about 120°C, or from about 100°C to about 120°C, or from about 105°C to about 120°C, or from about 110°C to about 120°C, or from about 110°C to about 115°C.

The heat deflection temperature of the polymer composition may be measured according to ISO 75-1 and ISO 75-2. A higher heat deflection temperature may be preferable, for example, when the polymer composition is used to form articles of manufacture for use at elevated temperatures (such as receptacle for hot foods and beverages or automotive parts), so that such articles exhibit a reduced tendency to soften and deform in use.

The polymer composition may have a crystallisation half time at 110°C no greater than about 50 seconds, for example, no greater than about 40 seconds, or no greater than about 35 seconds, or no greater than about 34 seconds, or no greater than about 33 seconds, or no greater than about 32 seconds, or no greater than about 31 seconds. The polymer composition may have a crystallisation half time at 110°C no less than about 10 seconds, for example, no less than about 20 seconds, or no less than about 25 seconds, or no less than about 30 seconds, or no less than about 31 seconds. The polymer composition may have a crystallisation half time at 110°C from about 10 seconds to about 50 seconds, for example, from about 10 seconds to about 40 seconds, or from about 10 seconds to about 35 seconds, or from about 10 seconds to about 34 seconds, or from about 10 seconds to about 33 seconds, or from about 10 seconds to about 32 seconds, or from about 10 seconds to about 31 seconds, or from about 20 seconds to about 50 seconds, or from about 20 seconds to about 40 seconds, or from about 20 seconds to about 35 seconds, or from about 20 seconds to about 34 seconds, or from about 20 seconds to about 33 seconds, or from about 20 seconds to about 32 seconds, or from about 20 seconds to about 31 seconds, or from about 25 seconds to about 50 seconds, or from about 25 seconds to about 40 seconds, or from about 25 seconds to about 35 seconds, or from about 25 seconds to about 34 seconds, or from about 25 seconds to about 33 seconds, or from about 25 seconds to about 32 seconds, or from about 25 seconds to about 31 seconds, or from about 30 seconds to about 50 seconds, or from about 30 seconds to about 40 seconds, or from about 30 seconds to about 35 seconds, or from about 30 seconds to about 34 seconds, or from about 30 seconds to about 33 seconds, or from about 30 seconds to about 32 seconds, or from about 30 seconds to about 31 seconds, or from about 31 seconds to about 50 seconds, or from about 31 seconds to about 40 seconds, or from about 31 seconds to about 35 seconds, or from about 31 seconds to about 34 seconds, or from about 31 seconds to about 33 seconds, or from about 31 seconds to about 32 seconds.

The crystallisation half time of the polymer composition may be measured by differential scanning calorimetry (DSC) by the method set out in the Examples. A lower crystallisation half time may be preferable as it typically means that the polymer composition can be processed more quickly to achieve a particular degree of crystallinity needed for a particular application.

The polymer composition may have a degree of crystallinity no less than about 30 %, for example, no less than about 35 %, or no less than about 40 %, or no less than about 45 %, or no less than about 47 %, or no less than about 48 %, or no less than about 49 %, or no less than about 50 %. The polymer composition may have a degree of crystallinity no greater than about 75 %, for example, no greater than about 70 %, or no greater than about 60 %, or no greater than about 55 %, or no greater than about 53 %, or no greater than about 52 %, or no greater than about 51 %, or no greater than about 50 %, or no greater than about 49 %. The polymer composition may have a degree of crystallinity from about 30 % to about 75 %, for example, from about 30 % to about 70 %, or from about 35 % to about 65 %, or from about 40 % to about 60 %, or from about 45 % to about 55 %, or from about 47 % to about 53 %, or from about 48 % to about 52 %, or from about 48 % to about 51 %.

The degree of crystallinity of the polymer composition may be measured by differential scanning calorimetry (DSC) by the method set out in the Examples. A higher degree of crystallinity may be preferable as it is associated with a higher heat deflection temperature.

The polymer composition may have: a Charpy impact strength from about 4.0 kJ/m to about 15.0 kJ/m, for example, from about 4.0 kJ/m to about 12.0 kJ/m, or from about 4.0 kJ/m to about 10.0 kJ/m, or from about 4.0 kJ/m to about 9.0 kJ/m, or from about 4.0 kJ/m to about 8.0 kJ/m, or from about 4.0 kJ/m to about 7.0 kJ/m, or from about 4.0 kJ/m to about 6.0 kJ/m, or from about 6.0 kJ/m to about 15.0 kJ/m, or from about 6.0 kJ/m to about 12.0 kJ/m, or from about 6.0 kJ/m to about 10.0 kJ/m, or from about 6.0 kJ/m to about 9.0 kJ/m, or from about 7.0 kJ/m to about 15.0 kJ/m, or from about 7.0 kJ/m to about 12.0 kJ/m, or from about 7.0 kJ/m to about 10.0 kJ/m, or from about 7.0 kJ/m to about 9.0 kJ/m; a tensile modulus from about 3500 MPa to about 7000 MPa, for example, from about 3500 MPa to about 6000 MPa, or from about 4000 MPa to about 5000 MPa, or from about 4500 MPa to about 5000 MPa, or from about 4500 MPa to about 4700 MPa, or from about 4600 MPa to about 4700 MPa, or from about 4500 MPa to about 6000 MPa, or from about 5000 MPa to about 6000 MPa, or from about 5300 MPa to about 5500 MPa; a heat deflection temperature from about 80°C to about 130°C, for example, from about 90°C to about 120°C, or from about 80°C to about 120°C, or from about 80°C to about 110°C, or from about 85°C to about 110°C, or from about 85°C to about 105°C, or from about 90°C to about 105°C, or from about 95°C to about 100°C, or from about 90°C to about 130°C, or from about 95°C to about 130°C, or from about 95°C to about 120°C, or from about 100°C to about 120°C, or from about 105°C to about 120°C, or from about 110°C to about 120°C, or from about 110°C to about 115°C; a crystallisation half time at 110°C from about 10 seconds to about 50 seconds, for example, from about 10 seconds to about 40 seconds, or from about 10 seconds to about 35 seconds, or from about 10 seconds to about 34 seconds, or from about 10 seconds to about 33 seconds, or from about 10 seconds to about 32 seconds, or from about 10 seconds to about 31 seconds, or from about 20 seconds to about 50 seconds, or from about 20 seconds to about 40 seconds, or from about 20 seconds to about 35 seconds, or from about 20 seconds to about 34 seconds, or from about 20 seconds to about 33 seconds, or from about 20 seconds to about 32 seconds, or from about 20 seconds to about 31 seconds, or from about 25 seconds to about 50 seconds, or from about 25 seconds to about 40 seconds, or from about 25 seconds to about 35 seconds, or from about 25 seconds to about 34 seconds, or from about 25 seconds to about 33 seconds, or from about 25 seconds to about 32 seconds, or from about 25 seconds to about 31 seconds, or from about 30 seconds to about 50 seconds, or from about 30 seconds to about 40 seconds, or from about 30 seconds to about 35 seconds, or from about 30 seconds to about 34 seconds, or from about 30 seconds to about 33 seconds, or from about 30 seconds to about 32 seconds, or from about 30 seconds to about 31 seconds, or from about 31 seconds to about 50 seconds, or from about 31 seconds to about 40 seconds, or from about 31 seconds to about 35 seconds, or from about 31 seconds to about 34 seconds, or from about 31 seconds to about 33 seconds, or from about 31 seconds to about 32 seconds; and a degree of crystallinity from about 30 % to about 75 %, for example, from about 30 % to about 70 %, or from about 35 % to about 65 %, or from about 40 % to about 60 %, or from about 45 % to about 55 %, or from about 47 % to about 53 %, or from about 48 % to about 52 %, or from about 48 % to about 51 %.

The polymer composition may have: a Charpy impact strength from about 6.0 kJ/m to about 10.0 kJ/m; a tensile modulus from about 4400 MPa to about 5000 MPa, for example, from about 4600 MPa to about 4700 MPa; a heat deflection temperature from about 95°C to about 105°C; a crystallisation half time at 110°C from about 25 seconds to about 35 seconds; and a degree of crystallinity from about 45 % to about 55 %.

The polymer composition may have: a Charpy impact strength from about 4.0 kJ/m to about 6.0 kJ/m; a tensile modulus from about 5000 MPa to about 6000 MPa, for example, from about 5200 MPa to about 5600 MPa; a heat deflection temperature from about 105°C to about 120°C, for example, from about 110°C to about 115°C; a crystallisation half time at 110°C from about 25 seconds to about 35 seconds; and a degree of crystallinity from about 45 % to about 55 %.

A "polymer composition that is identical except that it does not comprise the talc particulate of the present invention but comprises the same amount of a talc different from the talc of the invention" may, for example, be a polymer composition in which the talc particulate of the present invention has been removed and replaced by another talc particulate. The talc particulate of the present invention may have been removed and replaced with a talc particulate not within the present invention, for example a commercial talc particulate such as Luzenac HAR T84 talc®. Luzenac HAR T84 talc® has a $d_{50sedi}$ of about 1.9 $\mu$m, a $d_{95sedi}$ of about 10.5 $\mu$m, a $d_{50laser}$ of about 10.5 $\mu$m, a $d_{95laser}$ of about 32.1 $\mu$m, a BET surface area of about 19.4 $m^2$/g, about 130 TOT layers, a shape factor of about 123 and a DI(TOT) of about 95.

Method for Making the Polymer Composition

The polymer composition may be prepared by combining polymer (comprising the one or more bioplastic polymers) or polymer precursors (comprising one or more bioplastic polymer precursors) with the talc particulate of the present invention and any other optional components.

In certain embodiments (for example, wherein the polymer composition comprises polylactic acid), talc particulate is added to a twin-screw extruder to which unfilled polymer is being fed and made molten. The talc particulate is fed into the extruder through a hopper, for example, via gravimetric feeding, and uniformly blends with the polymer. The mixture emerges from the extruder and may be cooled. Then, for example, the mixture can be further compression moulded or injection moulded into useful shapes.

The methods described above may include compounding and extrusion. Compounding may be carried out using a twin screw compounder, for example, a Clextral BC 21 double screw extruder or a Leistritz ZSE 18 double screw extruder or a Leistritz 27 mm twin screw extruder or a Baker Perkins 25 mm twin screw compounder. The polymer, talc particulate and optional additional components may be premixed and fed from a single hopper. The resulting melt may be cooled, for example, in a water bath, and then pelletized. Test pieces, e.g., Charpy bars or tensile dumbbells, may be injection moulded or compression moulded or cast or blown into film.

The screw temperature may be between about 100 °C and about 300 °C, for example, between about 150 °C and about 280 °C, for example, between about 180 °C and about 250 °C, or between about 200 °C and 230 °C, or between about 150 °C and 210 °C, or between about 180 °C and 200 °C.

Screw speed may be between about 100 and 1200 rpm, for example, between about 100 and 1000 rpm, for example, between about 200 and 800 rpm, for example, between about 250 and 650 rpm, for example, between about 200 and 400 rpm, or between about 500 and 700 rpm, or between about 600 and 1000 rpm, or between about 700 and 900 rpm. In certain embodiments, screw speed is about 300 rpm. In other embodiments, screw speed is about 600 rpm.

Suitable injection molding apparatus includes, for example, a Billion 50T Proxima press. The polymer composition may be dried prior to molding. Drying may be carried out at any suitable temperature, for example, about 60°C, for a suitable period of time, for example, between about 1 hours and 20 hours, for example, between about 2 and 18 hours, or between about 1 and 3 hours, or between about 4 and 8 hours, or between about 12 and 18 hours. The temperature during drying may be kept constant or varied. In certain embodiments, the temperature during drying is between about 70 and 120 °C, for example, between about 80 and 100 °C, for example, about 90°C.

Molding is generally conducted at a temperature at which the polymer composition is flowable. For example, the molding temperature may be between about 100 and 300 °C, for example, between about 200 and 300 °C, or between about 240 and about 280°C. Following molding the molded piece will be allowed to cool and set.

Other suitable processing techniques include gas-assisted injection molding, calendaring, vacuum forming, thermoforming, blow-molding, drawing, spinning, film forming, laminating or any combination thereof. Any suitable apparatus may be used, as will be apparent to one of ordinary skill in the art.

The compounded compositions may further comprise additional components, such as slip aids (for example Erucamide), process aids (for example Polybatch® AMF-705), mould release agents and antioxidants.

Suitable mould release agents will be readily apparent to one of ordinary skill in the art, and include fatty acids, and zinc, calcium, magnesium and lithium salts of fatty acids and organic phosphate esters. Specific examples are stearic acid, zinc stearate, calcium stearate, magnesium stearate, lithium stearate calcium oleate, zinc palmitate. Typically, slip and process aids, and mould release agents are added in an amount less than about 5 wt. % based on the weight of the masterbatch. Polymer articles may then be extruded, compression moulded or injected moulded using conventional techniques known in the art, as will be readily apparent to one of ordinary skill in the art. Thus, as described below, the present invention is also directed to articles formed from the polymer compositions of the present invention.

In certain embodiments, the polymer composition comprises a colorant which, if present, will be added during compound of the polymer composition. The colorant may be added in the form of a masterbatch. Suitable colours are many and various.

The polymer composition can be processed to form, or to be incorporated in, articles of manufacture or commerce in any suitable way, as described herein. The articles which may be formed from the polymer composition are many and various. Examples include films, sheets, filaments or fibres, cast articles, injection moulded articles, additively manufactured articles, spun articles, woven or non-woven fabrics, items of tableware, housings for components, packaging articles such as food packaging articles or pharmaceutical or cosmetic packaging articles, containers, trays, bags, cups, bottles, garments, personal hygiene products, automotive components, and medical devices.

Uses of the Talc Particulate

The talc particulate of the present invention may be used in polymer compositions comprising a bioplastic polymer. For example, the talc particulate may be used to increase the impact strength (e.g. Charpy impact or drop impact strength as described above), the tensile modulus and/or the heat deflection temperature of a polymer composition, comprising a bioplastic polymer, into which it is incorporated.

The polymer composition may, for example, be in accordance with any embodiment described herein.

The polymer composition can be processed to form, or to be incorporated in, articles of commerce in any suitable way, as described herein. The articles which may be formed from the polymer composition are many and various. Examples include films, sheets, filaments or fibres, cast articles, injection moulded articles, additively manufactured articles, spun articles, woven or non-woven fabrics, items of tableware, housings for components, packaging articles such as food packaging articles or pharmaceutical or cosmetic packaging articles, containers, trays, bags, cups, bottles, garments, personal hygiene products, automotive components, and medical devices.

It will be understood that the invention is not limited to the embodiments described above and various modifications and improvements can be made without departing from the concepts described herein. Except where mutually exclusive, any of the features may be employed separately or in combination with any other features and the disclosure extends to and includes all combinations and sub-combinations of one or more features described herein.

For the avoidance of doubt, the present application is directed to the subject-matter described in the following numbered paragraphs:

    1. A polymer composition comprising a bioplastic polymer and a talc particulate having:

        (A)

            (a) a lamellarity index equal to or greater than about 2.8;
            (b) one or both of:

    (i) a $d_{95sedi}$ equal to or greater than about 1.0 $\mu$m and equal to or less than about 5.0 $\mu$m ; and
    (ii) a $d_{95laser}$ equal to or greater than about 7.0 $\mu$m and equal to or less than about 20.0 $\mu$m ; and

  (c) one or more of:

    (i) a BET surface area equal to or greater than about 20 m$^2$/g and equal to or less than about 30 m$^2$/g;
    (ii) a $d_{50sedi}$ equal to or greater than about 0.5 $\mu$m and equal to or less than about 2.5 $\mu$m ; and
    (iii) a $d_{50laser}$ equal to or greater than about 2.0 $\mu$m and equal to or less than about 8.0 $\mu$m;

(B) a delamination index according to TOT layers (DI(TOT)) equal to or greater than about 103;

(C) an oil absorption equal to or greater than about 65 mL/100 g and a lamellarity index equal to or greater than about 2.8; or

(D) a contact angle equal to or less than about 43° and one or more of the following:

  (a) a $d_{95sedi}$ equal to or less than about 6.5 $\mu$m;
  (b) a $d_{95laser}$ equal to or less than about 23.0 $\mu$m;
  (c) a delamination index according to TOT layers (DI(TOT)) equal to or greater than about 103;
  (d) an oil absorption equal to or greater than about 65 mL/100 g.

2. Use of a talc particulate in a polymer composition comprising a bioplastic polymer to:
increase the impact strength of the polymer composition; increase the tensile modulus of the polymer composition; and/or increase the heat deflection temperature of the polymer composition; wherein the talc particulate has:

  (A)

    (a) a lamellarity index equal to or greater than about 2.8;
    (b) one or both of:

      (i) a $d_{95sedi}$ equal to or greater than about 1.0 $\mu$m and equal to or less than about 5.0 $\mu$m ; and
      (ii) a $d_{95laser}$ equal to or greater than about 7.0 $\mu$m and equal to or less than about 20.0 $\mu$m ; and

    (c) one or more of:

      (i) a BET surface area equal to or greater than about 20 m$^2$/g and equal to or less than about 30 m$^2$/g;
      (ii) a $d_{50sedi}$ equal to or greater than about 0.5 $\mu$m and equal to or less than about 2.5 $\mu$m ; and
      (iii) a $d_{50laser}$ equal to or greater than about 2.0 $\mu$m and equal to or less than about 8.0 $\mu$m;

  (B) a delamination index according to TOT layers (DI(TOT)) equal to or greater than about 103;

  (C) an oil absorption equal to or greater than about 65 mL/100 g and a lamellarity index equal to or greater than about 2.8; or

  (D) a contact angle equal to or less than about 43° and one or more of the following:

    (a) a $d_{95sedi}$ equal to or less than about 6.5 $\mu$m;
    (b) a $d_{95laser}$ equal to or less than about 23.0 $\mu$m;
    (c) a delamination index according to TOT layers (DI(TOT)) equal to or greater than about 103;
    (d) an oil absorption equal to or greater than about 65 mL/100 g.

3. A method of: increasing the impact strength of a polymer composition comprising a bioplastic polymer; increasing the tensile modulus of the polymer composition comprising the bioplastic polymer; and/or increasing the heat deflection temperature of the polymer composition comprising the bioplastic polymer; wherein the method comprises adding a talc particulate to the polymer composition and the talc particulate has:

  (A)

(a) a lamellarity index equal to or greater than about 2.8;
(b) one or both of:

(i) a $d_{95sedi}$ equal to or greater than about 1.0 $\mu$m and equal to or less than about 5.0 $\mu$m ; and
(ii) a $d_{95laser}$ equal to or greater than about 7.0 $\mu$m and equal to or less than about 20.0 $\mu$m ; and

(c) one or more of:

(i) a BET surface area equal to or greater than about 20 m$^2$/g and equal to or less than about 30 m$^2$/g;
(ii) a $d_{50sedi}$ equal to or greater than about 0.5 $\mu$m and equal to or less than about 2.5 $\mu$m ; and
(iii) a $d_{50laser}$ equal to or greater than about 2.0 $\mu$m and equal to or less than about 8.0 $\mu$m;

(B) a delamination index according to TOT layers (DI(TOT)) equal to or greater than about 103;

(C) an oil absorption equal to or greater than about 65 mL/100 g and a lamellarity index equal to or greater than about 2.8; or

(D) a contact angle equal to or less than about 43° and one or more of the following:

(a) a $d_{95sedi}$ equal to or less than about 6.5 $\mu$m;
(b) a $d_{95laser}$ equal to or less than about 23.0 $\mu$m;
(c) a delamination index according to TOT layers (DI(TOT)) equal to or greater than about 103;
(d) an oil absorption equal to or greater than about 65 mL/100 g.

4. The polymer composition according to paragraph 1 (B) or paragraph 1 (C), the use according to paragraph 2 (B) or paragraph 2 (C), or the method according to paragraph 3 (B) or paragraph 3 (C), wherein the talc particulate has one or more of the following:

(a) a $d_{95laser}$ equal to or less than about 25.0 $\mu$m and/or equal to or greater than about 7.0 $\mu$m ;
(b) a $d_{95sedi}$ equal to or less than about 10.0 $\mu$m and/or equal to or greater than about 1.0 $\mu$m ;
(c) a $d_{50laser}$ equal to or less than about 12.0 $\mu$m and/or equal to or greater than about 2.0 $\mu$m ;
(d) a $d_{50sedi}$ equal to or less than about 5.0 $\mu$m and/or equal to or greater than about 0.5 $\mu$m ;
(e) a BET surface area equal to or greater than about 15 m$^2$/g and/or equal to or less than about 30 m$^2$/g.

5. The polymer composition, use or method according to any of paragraphs 1 to 4, wherein the talc particulate has one or more of the following:

(a) a coherent scattering domain (CSD c*) equal to or less than about 1150 Angstroms and/or equal to or greater than about 750 Angstroms;
(b) equal to or less than about 120 tetrahedral-octahedral-tetrahedral (TOT) layers and/or equal to or greater than about 50 TOT layers;
(c) a delamination index according to TOT layers (DI(TOT)) equal to or greater than about 103 and/or equal to or less than about 200.

6. The polymer composition, use or method according to any of paragraphs 1 to 5, wherein the talc particulate has one or more of the following:

(a) a shape factor equal to or greater than about 70 and/or equal to or less than about 200;
(b) a lamellarity index equal to or greater than about 2.8 and/or equal to or less than about 6.0.

7. The polymer composition, use or method according to any of paragraphs 1 to 6, wherein the talc particulate has an oil absorption equal to or greater than about 65 mL/100g and/or equal to or less than about 100 mL/100g.

8. The polymer composition, use or method according to any of paragraphs 1 to 7, wherein the talc particulate has a contact angle equal to or less than about 43° and/or equal to or greater than about 33°.

9. The polymer composition, use or method according to any of paragraphs 1 to 8, wherein the talc particulate has:

(a) a lamellarity index equal to or greater than about 2.8, for example, from about 2.8 to about 3.5;

(b) a $d_{95sedi}$ from about 3.0 $\mu$m to about 5.0 $\mu$m ;

(c) a $d_{95laser}$ from about 10.0 $\mu$m to 13.0 $\mu$m;

(c) a BET surface equal to or greater than about 20 m$^2$/g, for example, from about 20 m$^2$/g to about 30 m$^2$/g;

(d) a $d_{50sedi}$ from about 1.0 $\mu$m to about 3.0 $\mu$m ;

(e) a $d_{50laser}$ from about 4.0 $\mu$m to about 6.0 $\mu$m;

(f) a delamination index according to TOT layers (DI(TOT)) equal to or greater than about 103, for example, from about 103 to about 110;

(g) a coherent scattering domain c* from about 1050 to about 1150; and/or

(h) a number of TOT layer (N(TOT)) from about 110 to about 120.

10. The polymer composition, use or method according to any of paragraphs 1 to 9, wherein the polymer composition comprises no less than about 0.1 wt. %, for example, no less than about 4 wt. %, or from about 0.1 wt. % to about 50 wt. %, or from about 0.1 wt. % to about 20 wt. %, or from about 4 wt. % to about 50 wt. %, or from about 4 wt. % to about 20 wt. %, of the talc particulate.

11. The polymer composition, use or method according to any of paragraphs 1 to 10, wherein the polymer composition comprises no less than about 20 wt. %, for example, from about 20 wt. % to about 96 wt. %, or from about 20 wt. % to about 95 wt. %, or from about 20 wt. % to about 50 wt. %, of the bioplastic polymer.

12. The polymer composition, use or method according to any of paragraphs 1 to 11, wherein the bioplastic polymer is polylactic acid.

13. The polymer composition, use or method according to any of paragraphs 1 to 12, wherein the polymer composition comprises an impact modifier other than the talc particulate.

14. A method for making a polymer composition according to any of paragraphs 1 to 13, the method comprising combining polymer comprising the bioplastic polymer, or polymer precursors comprising bioplastic polymer precursors, with the talc particulate.

15. An article of manufacture comprising the polymer composition according to any of paragraphs 1 to 13, optionally wherein the article of manufacture is one or more of: a film, a sheet, a filament or fibre, a cast article, an injection moulded article, an additively manufactured article, a spun article, a woven or non-woven fabric, an item of tableware, a housing for a component, a packaging article such as a food packaging article or a pharmaceutical or cosmetic packaging article, a container, a tray, a bag, a cup, a bottle, a garment, a personal hygiene product, an automotive component, a medical device.

**EXAMPLES**

Example 1 - Production of Talc Particulate of the Invention

A high aspect ratio (HAR) feed talc material **(Feed Talc Material A)** was separated into fractions by air classification (BORA 50 SD).

The system operating parameters for the classification are shown in Table 1 below.

**Table 1.**

| System Operating Parameters | Classification to obtain Inventive Talc Particulate A |
|---|---|
| Feed Material | Feed Talc Material A |
| NEA speed (rpm) | 4900 |
| Air flow (m3/h) | 1400 |
| Secondary air flow (m3/h) | 200 |
| Feed rate (kg/h) | 170 |
| Fines yield (%) | 31.4 |

This produced Inventive Talc Particulate A.

Example 2 - Analysis of the Talc Material of Example 1

A number of particle shape, size and surface properties of the talc material described in Example 1 were analyzed by the methods described herein. This was also compared to four different commercially available talc materials **(Comparative Talcs A, B, C and D)**.

The results are shown in Tables 2 to 5 below.

**Table 2.**

| Talc Material | N (TOT) | CSD c* (Å) | Shape Factor | DI (TOT) | BET Surface Area (m²/g) | Oil Absorptio n (mL/100g ) | Contact Angle (°) |
|---|---|---|---|---|---|---|---|
| **Feed Talc Material A** | 145 | 1352 | 128 | 88 | 14.9 | 64 | 38.3 |
| **Inventive Talc Particulate A** | 118 | 1100 | 121 | 103 | 20.2 | - | - |
| **Comparative Talc A** | - | - | - | - | 9.0 | - | - |
| **Comparative Talc B** | 117 | 1185 | - | - | 14.5 | - | - |
| **Comparative Talc C** | 152 | 1418 | 134 | 88 | 19.2 | - | - |
| **Comparative Talc D** | - | - | - | - | 15 | - | - |

**Table 3.**

| Talc Material | Sedigraph | | | |
|---|---|---|---|---|
| | $d_{95}$ (μm) | $d_{75}$ (μm) | $d_{50}$ (μm) | $d_{25}$ (μm) |
| **Feed Talc Material A** | 10.6 | 4.8 | 2.5 | 0.9 |
| **Inventive Talc Particulate A** | 4 | 2.2 | 1.3 | 0.7 |
| **Comparative Talc A** | 6.5 | 1.8 | 2.3 | 0.8 |
| **Comparative Talc B** | 3.7 | 2.0 | 1.1 | 0.7 |
| **Comparative Talc C** | 11.8 | 4.3 | 2 | 0.7 |
| **Comparative Talc D** | 6.0 | 3.2 | 1.9 | 0.95 |

**Table 4.**

| Talc Material | Laser | | | |
|---|---|---|---|---|
| | $d_{95}$ (μm) | $d_{75}$ (μm) | $d_{50}$ (μm) | $d_{25}$ (μm) |
| **Feed Talc Material A** | 31.3 | 18.0 | 11.7 | 7.4 |
| **Inventive Talc Particulate A** | 11.2 | 7.1 | 5.1 | 3.5 |
| **Comparative Talc A** | 13.5 | 5.5 | 6.1 | 3.0 |
| **Comparative Talc B** | 7.8 | 5.0 | 3.9 | 3.0 |
| **Comparative Talc C** | 37.6 | 19.0 | 11.4 | 6.7 |
| **Comparative Talc D** | 13 | 7.0 | 4.7 | 3.5 |

**Table 5.**

| Talc Material | Lamellarity Index |
|---|---|
| Feed Talc Material A | 3.7 |
| Inventive Talc Particulate A | 2.9 |
| Comparative Talc A | 1.6 |
| Comparative Talc B | 2.5 |
| Comparative Talc C | 4.7 |
| Comparative Talc D | 1.5 |

Example 3 - Polymer Compositions Comprising Talc Materials of Examples 1 and 2

The talc materials of Examples 1 and 2 were incorporated into a polymer composition having 5 wt.% or 10 wt.% talc loading as follows:

- Formulation:

  ○ 93 wt.% or 88 wt.% polylactic acid (Resin PLA Luminy® L130, batch 1909001991, available from Total Corbion, which is a high heat, medium flow polylactic acid homopolymer having a density of 1.24 g/cm$^3$, a melt flow index (ISO 1133-A at 210°C/2.16 kg) of 24 g/10 min, a melt flow index (ISO 1133-A at 190°C/2.16 kg) of 10 g/10 min, and a stereochemical purity (by the Corbion method) of a minimum of 99 % L-isomer)
  ○ 5 wt.% or 10 wt. % of talc as shown
  ○ 2 wt.% of impact modifier (Biostrength® 150 available from Arkema)

- Extrusion conditions

  ○ Extrusion: twin screw extruder (Leistritz® 27 mm extruder)
  ○ Temperature profile: 30°C in the first heating zone + 190°C x 10 in the 10 following heating zones according to the Total Corbion processing guide
  ○ Throughput: 10 kg/h
  ○ Screw speed: 800 rpm
  ○ Talc fed on first side feeder in the melt zone
  ○ Impact modifier fed using a microdosing unit

- Injection conditions

  ○ Temperature: 210°C all zones with mold at 90°C
  ○ Dynamic phase: 800 bar pressure; 50 cm$^3$/s flow; 36 cm$^3$ volume; commutation by volume, not pressure
  ○ Holding phase: 600 bar pressure; 27 seconds holding time; 60 seconds mold time
  ○ Feeding phase: 50 cm$^3$ volume; 50 bar back pressure; 100 rpm screw speed

- Products tested:

  ○ Comparative Talcs A, B, C and D
  ○ Inventive Talc Particulate A

Charpy impact strength at 23°C, tensile modulus, heat deflection temperature (according to ISO 75-1 and ISO 75-2), crystallisation half time and degree of crystallinity were measured by the methods described herein. These properties were also measured for neat poly-L-lactide (PLLA).
The results are shown in Tables 6 (for 5 wt.% talc loading) and 7 (for 10 wt.% talc loading) below.

Table 6.

|  | Crystallisation half time at 110°C (seconds) | Degree of crystallinity (%) | Heat deflection temperature (°C) | Charpy impact resistance (kJ/m³) | Tensile modulus (MPa) |
|---|---|---|---|---|---|
| Neat PLLA | >300 | 5 | 60 | <5 | 3500 |
| Comparative Talc A | 38 | 50 | 95 | 5.3 | 4346 |
| Comparative Talc B | 35 | 51 | 85 | 7 | 4133 |
| Comparative Talc C | 34 | 49 | 93 | 7.6 | 4404 |
| Comparative Talc D | 40 | 50 | 85 | 5.3 | 4251 |
| Inventive Talc A | 32 | 49 | 98 | 8 | 4666 |

Table 7.

|  | Crystallisation half time at 110°C (seconds) | Degree of crystallinity (%) | Heat deflection temperature (°C) | Charpy impact resistance (kJ/m³) | Tensile modulus (MPa) |
|---|---|---|---|---|---|
| Neat PLLA | >300 | 5 | 60 | <5 | 3500 |
| Comparative Talc A | 35 | 50 | 111 | 3.9 | 4745 |
| Comparative Talc B | 30 | 52 | 107 | 4.7 | 4687 |
| Comparative Talc C | 31 | 50 | 109 | 4.1 | 5389 |
| Comparative Talc D | 36 | 49 | 92 | 3.3 | 4215 |
| Inventive Talc A | 31 | 50 | 112 | 5.0 | 5431 |

Further polymer compositions were prepared using non-talc minerals **Comparative Mineral A, Comparative Mineral B** and **Comparative Mineral C.** Comparative Mineral A was a fine, wet-ground mica, such as WG 333™ available from Imerys S.A., France. Comparative Mineral B was a surface-treated ground calcium carbonate, such as FilmLink® 520 available from Imerys S.A., France. Comparative Mineral C was a surface-treated hydrous kaolin, such as Polarite® 902A available from Imerys S.A., France. The polymer compositions were prepared by the same method described hereinabove, with the talc replaced by the non-talc mineral. Charpy impact strength at 23°C, tensile modulus, heat deflection temperature (according to ISO 75-1 and ISO 75-2), crystallisation half time and degree of crystallinity were again measured by the methods described herein.

The results are shown in Table 8 (for 10 wt.% mineral loading).

**Table 8.**

| | Crystallisation half time at 110°C (seconds) | Degree of crystallinity (%) | Heat deflection temperature (°C) | Charpy impact resistance (kJ/m$^3$) | Tensile modulus (MPa) |
|---|---|---|---|---|---|
| **Neat PLLA** | >300 | 5 | 60 | <5 | 3500 |
| **Inventive Talc A** | 31 | 50 | 112 | 5.0 | 5431 |
| **Comparative Talc C** | 31 | 50 | 109 | 4.1 | 5389 |
| **Comparative Mineral A** | 73 | 40 | 58 | 3.3 | 6067 |
| **Comparative Mineral B** | 104 | 30 | 57 | 3.4 | 3578 |
| **Comparative Mineral C** | 86 | 37 | 65 | 3.3 | 3990 |

Example 4 - Method for determining Particle Size Distribution (by sedigraph)

The Particle Size Distribution (PSD) was determined using a Sedigraph III from Micromeritics Instruments.

A dispersive solution was prepared by weighing out (using an analytical balance) and fully dissolving (by mechanical stirring) 250 mg of Calgon (sodium metaphosphate) in a beaker containing 1 litre of demineralised water. This step took from 45 to 60 minutes. 1 ml of Triton X (polyethylene glycol octyl phenyl ether) was then added to the solution while stirring for at least 10 minutes. Calgon and Trion X are wetting and dispersing agents.

A sample of talc particulate was prepared for sedigraphic analysis by combining 4.8 g of the talc particulate sample with 80 ml of the dispersive solution. Initially, the talc particulate was combined with a few drops of the 80 ml of dispersive solution in a beaker and the mixture was mixed using a manual stirrer until a paste consistency was achieved. The remainder of the 80 ml of the dispersive solution was then added to the beaker. The beaker was placed in an ultrasonic bath for 30 seconds to remove air bubbles.

Sedigraphic analysis was then carried out on the dispersed sample using the Sedigraph III with the following settings:

- Dispersive solution viscosity: 0.7523 mPa.s
- Dispersive solution density: 0.9948 g/cm$^3$
- Sample density: 2.78 g/cm$^3$ for talc powder
- Diameter max.: 52 $\mu$m
- Diameter min.: 0.4 $\mu$m
- Mode: high speed
- Air bubbles detection: coarse

A result was considered to be valid when the following criteria were met:

- the Reynolds number was below 0.3;
- the baseline (on the dispersive solution only) was between 125-130 kcounts/s;
- the full scale (on the sample suspension) was between 95-105 kcounts/s; and
- the difference between base/full scale was below 35 kcounts/s.

Example 5 - Method for determining Particle Size Distribution (by laser diffraction)

The Particle Size Distribution (PSD) was determined using a Mastersizer 2000 from Malvern instruments.

A sample of talc particulate was prepared for laser diffraction analysis. The required quantity of talc particulate was weighed in a 50 ml beaker. For a talc particulate having a $d_{50}$ (by sedigraph) equal to or greater than 10 $\mu$m, a quantity of between 1 g and 2 g of the talc particulate was used. For a talc particulate having a $d_{50}$ (by sedigraph) less than 10 $\mu$m, a quantity of between 0.2 g and 0.5 g of the talc particulate was used.

For coarse talc particulates (having a $d_{50}$, by sedigraph, equal to or greater than 10 $\mu$m), the sample was combined with absolute ethanol (99.5%) wetting agent. In particular, the powder sample was distributed well at the bottom of the beaker. A few drops of ethanol was added to the powder and mixed using a manual stirrer until a paste consistency was achieved. Between 2 ml and 2.5 ml of ethanol was added to the beaker using a 3 ml disposable pipette and the suspension mixed with the manual stirrer. The beaker was placed in an ultrasonic bath for 30 seconds to remove air bubbles.

Laser diffraction analysis was then carried out on the sample using the Mastersizer 2000 with the following settings:

- Sampler: Hydro 2000G
- Measurement theory: Mie 1.589- 0.01 (i.e. the talc refractive index)
- Water refraction index: 1.33
- Measurement range: 0.02 - 2000 $\mu$m
- Result calculation model: standard analysis
- Number of snaps:

   Duration of measurement: 8 seconds
   Number of snaps per measurement: 8000 snaps
   Background noise time: 8000 snaps
   Background noise snaps: 8 seconds

- Obscuration limits:

   Low: 5 %
   High: 20 %

- Background noise alarm (value of background noise of detector n°1): below 150 units
- Measurement parameters of the sampler:

   Pump: 1800 rpm
   Stirring: 700 rpm
   Ultra-sonics: 100%

The analysis was carried out as follows:
First, it was checked that the obscuration lower limit was set to 5 % and the obscuration upper limit was set to 20 %. The stirrer speed was set to 700 rpm, the pump to 1800 rpm, and the Ultrasonics to 100 %. The intensity of the laser was checked. If the intensity of the laser was below 77.5%, the following were checked: that the measurement cell was clean; that there were no air bubbles; and that there was no condensation on the measurement cell windows.

The background noise was measured and the intensity of the lasers (red and blue) was measured. Once the lasers were aligned, the intensity of the lasers and the intensity of the background noise (which must be in continuous decline from detector n° 1 to detector n° 51) was checked.

A 2 ml sample was taken from the beaker containing the talc particulate suspension using a disposable pipette and added, drop by drop, into the measurement cell until the required obscuration was obtained: for products with a $d_{50}$ (by sedigraph) greater than or equal to 10 $\mu$m , measurement with an obscuration of between 15 and 20% was used; for products with a $d_{50}$ (by sedigraph) below 10 $\mu$m, measurement an obscuration of between 5 and 12% was used. The suspension was homogenised in the cell for about 60 seconds.

The software directly traces the PSD curve expressed as a percentage of fines. The curve validity is controlled by the value of the weighted residual, the signal-to-noise ratio and the distribution of the luminous intensity of the background noise as a function of detectors. The result obtained is valid so long as the weighted residue is below 1.5% and there are no anomalies in the curve. The intensities of the measurement signal and the background noise on the detectors can be consulted using the data report tab. The intensity of the background noise must steadily decline from detector n° 1 to detector n° 51. The intensity of the measurement signal must be significantly greater than that of the background noise. The intensity of the background noise depends on how clean the cell is. The intensity of the signal depends mainly on the sample concentration (i.e. on the obscuration).

It has been found that a number of problems may arise, such as air bubbles or condensation in the measurement cell, if the pressure is too high or the water temperature is too cold. In order to avoid such problems, it is recommended to install a filtration system to improve water cleanliness and reduce its pressure, and to install a mixer tap to regulate the water temperature between 20 and 25°C before the tank is supplied. It is also recommended that the optical bench (lasers) is never switched off

Example 6 - Method for determining BET Specific Surface Area

The BET specific surface area was determined using a method based on the standard NF X 11-621 titled "Determination de l'aire massique (surface specifique) des poudres par adsorption de gaz - Methode B.E.T. - Mesure volumétrique par adsorption d'azote à basse temperature" (Determination of mass area (specific surface) of powders by gas adsorption - BET Methods - Volumetric measurement by nitrogen adsorption at low temperature).

The method made use of a Micromeritics measurement apparatus (available from Micromeritics Instrument Corp., USA) including a vacuum pump, a VacPrep 061 degassing section, a Tristar 3000S measurement section and sample holders, a Mettler AG204 scale with a precision of 0.1 mg, Dewar flasks, nitrogen adsorbant gas and helium carrier gas.

The sample was weighed (to 0.1 mg accuracy) near the empty sample holder and its mass $M_0$ was recorded in g. The previously homogenised powder sample was then introduced, using a funnel, into the sample holder. Sufficient space (dead volume) was left between the sample and the top of the sample holder to enable free circulation of gas. The sample holder was placed into one of the degassing stations and degassed at 250°C under a primary vacuum of 10 Pa for about 20 minutes. After degassing, a sufficient volume of nitrogen was added to the sample holder to avoid introducing air during transfer of the sample holder from the degassing station to the measurement station.

The sample holder was then attached to the measurement station and a Dewar flask containing liquid nitrogen was placed around the sample holder. The BET measurement was commenced using the device control software. The device then carried out the following operations automatically:

- Vacuum removal of the nitrogen introduced for the transfer of the sample holder;
- Leak test;
- Adding helium carrier gas;
- Measuring the dead volume at ambient temperature;
- Measuring the cold dead volume using liquid nitrogen;
- Helium vacuum removal;
- Leak test;
- Adding nitrogen at 950 mm Hg and measuring the saturation pressure; and
- Acquisition of analysis values.

The instrument's data acquisition and processing software plotted the transformed BET line from 5 measured adsorption points. The Dewar flask and then the sample holder were removed. The apparatus was allowed to return to ambient temperature and then the sample was again weighed (to an accuracy of 0.1 mg) near the sample holder and the weight was recorded as $M_2$ in g. The mass of the test portion of the sample, M, was calculated (in g) according to:

$$M = M_2 - M_0$$

The value M was then introduced into the software calculation program which automatically calculated the BET specific surface area of the sample in $m^2/g$.

Example 7 - Method for determining oil absorption

The oil absorption was determined by measuring the amount of oil necessary to wet the totality of a mass of the sample particulate (i.e. the amount of oil necessary to form a paste which does not crack or run off with the addition of water) according to ISO 787-5.

The equipment used included:

- Graduated burette
- Non-cutting glass plate
- 2 soft spatulas (length 155 mm x width 25 mm)
- 1 crystallizer
- Soapy water
- Balance accurate to 1 mg
- Linseed oil having a specific gravity of 0.93 g/mL

Between 0.5 g to 5 g of the particulate (dependent on the density) was weighed out to produce a sample having a volume of about 10 mL. The mass of the sample was recorded as M. The sample was placed on the glass plate. The burette was filled with the linseed oil and the initial volume of oil in the burette was noted as $V_0$. Oil (typically between 3 and 4 drops) was gradually added to the sample using the burette and the sample was mixed using a spatula until a paste was formed. Oil was then added to the paste drop by drop, with the paste being kneaded between the addition of each drop, until a smooth, solid and non-dripping paste was formed. A smooth, solid and non-dripping paste was considered to be formed when the paste could be shaped into a ball without cracking or dripping with the addition of water. Figure 1 (a) shows an example ball which can be shaped when a paste is smooth. Figure 1 (b) shows a ball of paste which has cracked. Figure 1 (c) shows a ball of paste which drips when water is added. When sufficient oil had been added to form a smooth, solid and non-dripping paste, the final volume of oil left in the burette was recorded as $V_1$.

The oil absorption was measured in mL/100g as:

$$Oil\ Absorption\ (mL/100g) = \frac{(V_1 - V_0) \times 100}{M}$$

or in wt. % as:

$$Oil\ Absorption\ (wt.\%) = \frac{(V_1 - V_0) \times 93}{M}$$

Example 8 - Method for determining contact angle

Water contact angle was measured using a FIBRO DAT 1100 Dynamic Absorption and Contact Angle Tester (available from FIBRO System, the Netherlands) kept in an airconditioned room at 23°C and 50% relative humidity. The talc sample was pressed into a compressed disc or tablet having a density of about 1.5 g/cm$^3$ and a thickness of about 2 mm using a hand-held press. Six of these thin discs/tablets were fitted into the relevant bar into the instrument and deionized water was added to the surface of each disc as 10 microliter droplets with a stroke pulse of 6 (this being a measure of the force at which the water droplet is expelled from the syringe tip of the FIBRO DAT 1100). The change in contact angle of the water droplets on the mineral surface was monitored with time and the results measured after 0.3 seconds (when the droplets were first stable on the pressed disc surfaces) were recorded. More hydrophobic surfaces give a higher water contact angle.

Example 9 - Method for determining crystallisation half time and degree of crystallinity

The crystallisation half time and the degree of crystallinity of a polymer composition was measured using differential scanning calorimetry (DSC), in particular, a Mettler Toledo D823$^e$ device, available from Mettler-Toledo International Inc., USA. The device was calibrated using standard indium and standard zinc samples. An empty pan was used as a reference.

*Degree of crystallisation*

About 5 to 10 mg of the sample to be analysed was placed in an aluminium crucible of 40 µL. The sample was heated from 25°C to 200°C at 10°C/minute and held for 2 minutes at 200°C to remove the thermal history. The sample was then cooled to 25°C at 10°C/minute and subsequently reheated to 200°C at a heating rate of 10°C/minute. The glass transition temperature (Tg), crystallisation temperature (Tc), melting temperature (Tm), crystallisation enthalpy (ΔHc), cold crystallisation enthalpy (ΔHcc) and melting enthalpy (ΔHm) were determined from cooling and second heating scans. The degree of crystallinity (Xc (in %)) was evaluated using the following equation

$$Xc(\%) = \frac{\Delta H}{\Delta H_m^0 \times \left(1 - \frac{wt.\%\ filler}{100}\right)} \times 100$$

where *ΔH* is ΔHc (for cooling curves, as ΔHc is the specific crystallisation enthalpy of the sample) or ΔHm - ΔHcc (for second heating curves, as ΔHm is the specific melting enthalpy of the sample and ΔHcc is the specific cold crystallisation enthalpy of the sample), $\Delta H_m^0$ is the melting enthalpy of the 100 % crystalline polymer matrix (93.0 J/g for polylactic acid) and *wt. % filler* is the total weight percentage of talc or other minerals in the polymer composition.

*Crystallisation half time*

To evaluate isothermal crystallisation values, a sample was heated from 25°C to 200°C at 10°C/minute and maintained at 200°C for 5 minutes. Subsequently, the sample was rapidly cooled (at a rate of 50°C/minute) to the isothermal evaluation temperature of 100°C. The sample was held at the isothermal evaluation temperature for 30 minutes, allowing crystallisation. A DSC thermal curve (i.e. a plot of heat flow as a function of time) was obtained and analysed using the Mettler Toledo STARe software, available from Mettler-Toledo International Inc., USA, to calculate the crystallization half time value.

The foregoing broadly describes certain embodiments of the present invention without limitation. Variations and modifications as will be readily apparent to those skilled in the art are intended to be within the scope of the present invention as defined in and by the appended claims.

**Claims**

1.  A polymer composition comprising a bioplastic polymer and a talc particulate having:

    (A)

        (a) a lamellarity index equal to or greater than about 2.8;
        (b) one or both of:

            (i) a $d_{95sedi}$ equal to or greater than about 1.0 $\mu$m and equal to or less than about 5.0 $\mu$m ; and
            (ii) a $d_{95laser}$ equal to or greater than about 7.0 $\mu$m and equal to or less than about 20.0 $\mu$m ; and

        (c) one or more of:

            (i) a BET surface area equal to or greater than about 20 m$^2$/g and equal to or less than about 30 m$^2$/g;
            (ii) a $d_{50sedi}$ equal to or greater than about 0.5 $\mu$m and equal to or less than about 2.5 $\mu$m ; and
            (iii) a $d_{50laser}$ equal to or greater than about 2.0 $\mu$m and equal to or less than about 8.0 $\mu$m ;

    (B) a delamination index according to TOT layers (DI(TOT)) equal to or greater than about 103;
    (C) an oil absorption equal to or greater than about 65 mL/100 g and a lamellarity index equal to or greater than about 2.8; or
    (D) a contact angle equal to or less than about 43° and one or more of the following:

        (a) a $d_{95sedi}$ equal to or less than about 6.5 $\mu$m ;
        (b) a $d_{95laser}$ equal to or less than about 23.0 $\mu$m ;
        (c) a delamination index according to TOT layers (DI(TOT)) equal to or greater than about 103;
        (d) an oil absorption equal to or greater than about 65 mL/100 g.

2.  Use of a talc particulate in a polymer composition comprising a bioplastic polymer to:

        increase the impact strength of the polymer composition;
        increase the tensile modulus of the polymer composition; and/or
        increase the heat deflection temperature of the polymer composition;
        wherein the talc particulate has:

    (A)

        (a) a lamellarity index equal to or greater than about 2.8;
        (b) one or both of:

            (i) a $d_{95sedi}$ equal to or greater than about 1.0 $\mu$m and equal to or less than about 5.0 $\mu$m ; and

(ii) a $d_{95laser}$ equal to or greater than about 7.0 $\mu$m and equal to or less than about 20.0 $\mu$m ; and

(c) one or more of:

(i) a BET surface area equal to or greater than about 20 m$^2$/g and equal to or less than about 30 m$^2$/g;
(ii) a $d_{50sedi}$ equal to or greater than about 0.5 $\mu$m and equal to or less than about 2.5 $\mu$m ; and
(iii) a $d_{50laser}$ equal to or greater than about 2.0 $\mu$m and equal to or less than about 8.0 $\mu$m ;

(B) a delamination index according to TOT layers (DI(TOT)) equal to or greater than about 103;
(C) an oil absorption equal to or greater than about 65 mL/100 g and a lamellarity index equal to or greater than about 2.8; or
(D) a contact angle equal to or less than about 43° and one or more of the following:

(a) a $d_{95sedi}$ equal to or less than about 6.5 $\mu$m ;
(b) a $d_{95laser}$ equal to or less than about 23.0 $\mu$m ;
(c) a delamination index according to TOT layers (DI(TOT)) equal to or greater than about 103;
(d) an oil absorption equal to or greater than about 65 mL/100 g.

3. A method of:

increasing the impact strength of a polymer composition comprising a bioplastic polymer;
increasing the tensile modulus of the polymer composition comprising the bioplastic polymer; and/or
increasing the heat deflection temperature of the polymer composition comprising the bioplastic polymer;

wherein the method comprises adding a talc particulate to the polymer composition and the talc particulate has:

(A)

(a) a lamellarity index equal to or greater than about 2.8;
(b) one or both of:

(i) a $d_{95sedi}$ equal to or greater than about 1.0 $\mu$m and equal to or less than about 5.0 $\mu$m ; and
(ii) a $d_{95laser}$ equal to or greater than about 7.0 $\mu$m and equal to or less than about 20.0 $\mu$m ; and

(c) one or more of:

(i) a BET surface area equal to or greater than about 20 m$^2$/g and equal to or less than about 30 m$^2$/g;
(ii) a $d_{50sedi}$ equal to or greater than about 0.5 $\mu$m and equal to or less than about 2.5 $\mu$m ; and
(iii) a $d_{50laser}$ equal to or greater than about 2.0 $\mu$m and equal to or less than about 8.0 $\mu$m ;

(B) a delamination index according to TOT layers (DI(TOT)) equal to or greater than about 103;
(C) an oil absorption equal to or greater than about 65 mL/100 g and a lamellarity index equal to or greater than about 2.8; or
(D) a contact angle equal to or less than about 43° and one or more of the following:

(a) a $d_{95sedi}$ equal to or less than about 6.5 $\mu$m ;
(b) a $d_{95laser}$ equal to or less than about 23.0 $\mu$m ;
(c) a delamination index according to TOT layers (DI(TOT)) equal to or greater than about 103;
(d) an oil absorption equal to or greater than about 65 mL/100 g.

4. The polymer composition according to claim 1 (B) or claim 1 (C), the use according to claim 2 (B) or claim 2 (C), or the method according to claim 3 (B) or claim 3 (C), wherein the talc particulate has one or more of the following:

(a) a $d_{95laser}$ equal to or less than about 25.0 $\mu$m and/or equal to or greater than about 7.0 $\mu$m;
(b) a $d_{95sedi}$ equal to or less than about 10.0 $\mu$m and/or equal to or greater than about 1.0 $\mu$m;
(c) a $d_{50laser}$ equal to or less than about 12.0 $\mu$m and/or equal to or greater than about 2.0 $\mu$m ;
(d) a $d_{50sedi}$ equal to or less than about 5.0 $\mu$m and/or equal to or greater than about 0.5 $\mu$m ;
(e) a BET surface area equal to or greater than about 15 m$^2$/g and/or equal to or less than about 30 m$^2$/g.

5. The polymer composition, use or method according to any of claims 1 to 4, wherein the talc particulate has one or more of the following:

    (a) a coherent scattering domain (CSD c*) equal to or less than about 1150 Angstroms and/or equal to or greater than about 750 Angstroms;
    (b) equal to or less than about 120 tetrahedral-octahedral-tetrahedral (TOT) layers and/or equal to or greater than about 50 TOT layers;
    (c) a delamination index according to TOT layers (DI(TOT)) equal to or greater than about 103 and/or equal to or less than about 200.

6. The polymer composition, use or method according to any of claims 1 to 5, wherein the talc particulate has one or more of the following:

    (a) a shape factor equal to or greater than about 70 and/or equal to or less than about 200;
    (b) a lamellarity index equal to or greater than about 2.8 and/or equal to or less than about 6.0.

7. The polymer composition, use or method according to any of claims 1 to 6, wherein the talc particulate has an oil absorption equal to or greater than about 65 mL/100g and/or equal to or less than about 100 mL/100g.

8. The polymer composition, use or method according to any of claims 1 to 7, wherein the talc particulate has a contact angle equal to or less than about 43° and/or equal to or greater than about 33°.

9. The polymer composition, use or method according to any of claims 1 to 8, wherein the talc particulate has:

    (a) a lamellarity index equal to or greater than about 2.8, for example, from about 2.8 to about 3.5;
    (b) a $d_{95sedi}$ from about 3.0 $\mu$m to about 5.0 $\mu$m;
    (c) a $d_{95laser}$ from about 10.0 $\mu$m to 13.0 $\mu$m ;
    (c) a BET surface equal to or greater than about 20 m$^2$/g, for example, from about 20 m$^2$/g to about 30 m$^2$/g;
    (d) a $d_{50sedi}$ from about 1.0 $\mu$m to about 3.0 $\mu$m ;
    (e) a $d_{50laser}$ from about 4.0 $\mu$m to about 6.0 $\mu$m ;
    (f) a delamination index according to TOT layers (DI(TOT)) equal to or greater than about 103, for example, from about 103 to about 110;
    (g) a coherent scattering domain c* from about 1050 to about 1150; and/or
    (h) a number of TOT layer (N(TOT)) from about 110 to about 120.

10. The polymer composition, use or method according to any of claims 1 to 9, wherein the polymer composition comprises no less than about 0.1 wt. %, for example, from about 0.1 wt. % to about 20 wt. %, of the talc particulate.

11. The polymer composition, use or method according to any of claims 1 to 10, wherein the polymer composition comprises no less than about 20 wt. %, for example, from about 20 wt. % to about 50 wt. %, of the bioplastic polymer.

12. The polymer composition, use or method according to any of claims 1 to 11, wherein the bioplastic polymer is polylactic acid.

13. The polymer composition, use or method according to any of claims 1 to 12, wherein the polymer composition comprises an impact modifier other than the talc particulate.

14. A method for making a polymer composition according to any of claims 1 to 13, the method comprising combining polymer comprising the bioplastic polymer, or polymer precursors comprising bioplastic polymer precursors, with the talc particulate.

15. An article of manufacture comprising the polymer composition according to any of claims 1 to 13, optionally wherein the article of manufacture is one or more of: a film, a sheet, a filament or fibre, a cast article, an injection moulded article, an additively manufactured article, a spun article, a woven or non-woven fabric, an item of tableware, a housing for a component, a packaging article such as a food packaging article or a pharmaceutical or cosmetic packaging article, a container, a tray, a bag, a cup, a bottle, a garment, a personal hygiene product, an automotive component, a medical device.

Fig. 1

(a)

(b)

(c)

Europäisches
Patentamt

European
Patent Office

Office européen
des brevets

# EUROPEAN SEARCH REPORT

**Application Number**

EP 21 30 6576

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 7 910 643 B2 (ADEKA CORP [JP]) 22 March 2011 (2011-03-22) * claims; examples * | 1-15 | INV. C08K3/34 C08L67/04 |
| A | US 2016/318249 A1 (KOCHESFAHANI SAIED [US]) 3 November 2016 (2016-11-03) * pages 8-10; claims; examples * | 1-15 | |
| A | EP 0 971 988 B1 (TALC DE LUZENAC [FR]) 3 July 2002 (2002-07-03) * claims; examples; table 1 * | 1-15 | |
| A | US 2014/235740 A1 (LIU JING [US]) 21 August 2014 (2014-08-21) * paragraphs [0028] - [0032]; claims; examples * | 1-15 | |

TECHNICAL FIELDS
SEARCHED        (IPC)

C08K

The present search report has been drawn up for all claims

| Place of search | Date of completion of the search | Examiner |
|---|---|---|
| Munich | 30 March 2022 | Masson, Patrick |

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons

 ...................................................................................

& : member of the same patent family, corresponding
     document

EPO FORM 1503 03.82 (P04C01)

## ANNEX TO THE EUROPEAN SEARCH REPORT
## ON EUROPEAN PATENT APPLICATION NO.

EP 21 30 6576

This annex lists the patent family members relating to the patent documents cited in the above-mentioned European search report.
The members are as contained in the European Patent Office EDP file on
The European Patent Office is in no way liable for these particulars which are merely given for the purpose of information.

30-03-2022

| Patent document cited in search report | | | Publication date | Patent family member(s) | | | Publication date |
|---|---|---|---|---|---|---|---|
| US | 7910643 | B2 | 22-03-2011 | CN | 101010382 | A | 01-08-2007 |
| | | | | EP | 1795560 | A1 | 13-06-2007 |
| | | | | JP | 4640765 | B2 | 02-03-2011 |
| | | | | JP | 2007332164 | A | 27-12-2007 |
| | | | | US | 2010174017 | A1 | 08-07-2010 |
| | | | | WO | 2006025520 | A1 | 09-03-2006 |
| US | 2016318249 | A1 | 03-11-2016 | EP | 3068622 | A1 | 21-09-2016 |
| | | | | US | 2016318249 | A1 | 03-11-2016 |
| | | | | US | 2019275784 | A1 | 12-09-2019 |
| | | | | WO | 2015069986 | A1 | 14-05-2015 |
| EP | 0971988 | B1 | 03-07-2002 | AT | 220088 | T | 15-07-2002 |
| | | | | AU | 7049898 | A | 30-10-1998 |
| | | | | DE | 69806364 | T2 | 06-03-2003 |
| | | | | EP | 0971988 | A1 | 19-01-2000 |
| | | | | ES | 2179482 | T3 | 16-01-2003 |
| | | | | FR | 2761692 | A1 | 09-10-1998 |
| | | | | US | 6348536 | B1 | 19-02-2002 |
| | | | | WO | 9845374 | A1 | 15-10-1998 |
| US | 2014235740 | A1 | 21-08-2014 | BR | 112014004328 | A2 | 21-03-2017 |
| | | | | CN | 103764759 | A | 30-04-2014 |
| | | | | EP | 2748257 | A1 | 02-07-2014 |
| | | | | KR | 20140058652 | A | 14-05-2014 |
| | | | | US | 2014235740 | A1 | 21-08-2014 |
| | | | | WO | 2013028857 | A1 | 28-02-2013 |

EPO FORM P0459

For more details about this annex : see Official Journal of the European Patent Office, No. 12/82

**EP 4 180 481 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016007363 A1

- US 5576617 A

**Non-patent literature cited in the description**

- **H. J. HOLLAND ; M. J. MURTAGH.** An XRD Morphology Index for Tales: The Effect of Particle Size and Morphology on the Specific Surface Area. *Advances in X-ray Analysis,* 2000, vol. 42, 421-428

- **DUMAS et al.** *Angewandte Chemie International Edition,* 2016, vol. 55, 9868-9871
- **G. BAUDET ; J. P. RONA.** *Ind. Min. Mines et Carr. Les techn.,* June 1990, 55-61